# EUROPEAN PATENT APPLICATION

(11) **EP 4 835 794 A1**
(43) Date of publication of application: **04.11.2026**
(21) Application number: 24911878.7
(22) Date of filing: 24.09.2024
(51) Int. Cl.: G06Q 30/0601, G06Q 50/10

(54) **COMPUTER SYSTEM AND ONLINE SHOPPING SYSTEM**

(30) Priority: 29.12.2023 JP 2023223775
(71) Applicant: ZOZO, Inc., Chiba-shi, Chiba, 263-0023 (JP)
(72) Inventor: IETA, Tsuyoshi, Chiba-shi, Chiba 263-0023 (JP); FUJII, Yuki, Chiba-shi, Chiba 263-0023 (JP); AOYAGI, Miki, Chiba-shi, Chiba 263-0023 (JP); MIYAGOSHI, Risa, Chiba-shi, Chiba 263-0023 (JP); LI, Bo, Auckland 1023 (NZ); JELLEYMAN, Hamish, Auckland 1023 (NZ); BRENNAN, Matthew, Auckland 1023 (NZ)
(74) Representative: Gunzelmann, Rainer
(86) International application number: PCT/JP2024/033914
(87) International publication number: WO 2025/141984

(57) **Abstract**

A server system (1100) includes an acquisition section (215), an estimation section (219), and a recommendation display control section (221). The acquisition section (215) acquires measurement information on a target user related to a body part where the item is worn. The estimation section (219) estimates, based on the measurement information, a first recommended size that satisfies a predetermined comfort level condition during a first comfortable period when the target user wears the item. The recommendation display control section (221) performs recommendation display control to display a first recommendation display indicating the first recommended size on a terminal apparatus.

## Description

### [TECHNICAL FIELD]

The present invention relates to a computer system and the like that display recommendation information on items that can be worn by a user on a terminal apparatus.

### [BACKGROUND ART]

There have been conventionally proposed technologies for providing information about clothing that corresponds to changes in the wearer's body shape. For example, Patent Document 1 discloses a technology for providing information for making purchase decisions about children's clothing. Specifically, according to the technology of Patent Document 1, the allowable sizes of children's clothing that can be worn are stored in advance, and the limit date and time at which the wearing user (child user) will no longer be able to wear the children's clothing are predicted based on the allowable sizes and the growth pattern of the wearing user. Therefore, the user can consider purchasing children's clothing after knowing the period during which the clothing can be worn.

### [RELATED-ART DOCUMENT]

### [PATENT DOCUMENT]

Patent Document 1: Japanese Unexamined Patent Application Publication No. 2007-265077

### [SUMMARY OF THE INVENTION]

### [TECHNICAL PROBLEM]

However, the technology of Patent Document 1 presents the user with a wearable period until the child user can no longer wear the children's clothing, which is not based on whether the wearing user can wear the clothing comfortably. Furthermore, although clothing has been described as an example of a wearable item, similar issues exist for wearable items other than clothing, such as shoes and hats, for example.

The object to be achieved by the present invention is to provide a technology for presenting information indicating the size at which a target user who wears an item can comfortably wear the item.

### [SOLUTION TO PROBLEM]

In accordance with one of some embodiments, there is provided a computer system that performs control for presenting recommendation information about an item to a user, the computer system comprising: an estimation section that estimates a recommended size of a target item that satisfies a predetermined comfort condition for a predetermined comfortable period consisting of a plurality of days, based on size information on a size of the target item, body size information on a body size of a target user at a body part where the target item is worn, and growth change information on a growth change of the body part; and a control section that performs control for presenting the recommended size estimated by the estimation section as the recommendation information.

In accordance with one of some embodiments, there is provided an online shopping system that includes a server and a terminal and performs control for presenting recommendation information about an item to a user, the online shopping system comprising: a functional section that executes information processing related to provision of an online shopping service; an estimation section that estimates a recommended size of a target item that satisfies a redetermined comfort condition for a predetermined comfortable period consisting of a plurality of days, based on size information on a size of the target item, body size information on a body size of a target user at a body part where the target item is worn, and growth change information on a growth change of the body part; and a control section that performs control for presenting the recommended size estimated by the estimation section as the recommendation information.

Further, a third aspect of the present invention is a computer system that performs control to display recommendation information on an item that is capable of being worn by a user on a terminal apparatus, and includes: an acquisition section that acquires measurement information of a target user related to a body part where the item is worn; an estimation section that estimates, based on the measurement information, a first recommended size to satisfy a predetermined comfort level condition during a first comfortable period when the item is worn by the target user; and a recommendation display control section that performs recommendation display control to display a first recommendation display indicating the first recommended size on the terminal apparatus.

### [BRIEF DESCRIPTION OF DRAWINGS]

[FIG. 1] FIG. 1 is a diagram illustrating an overall configuration example of an online shopping system.
[FIG. 2] FIG. 2 is a diagram illustrating an apparatus configuration example of a terminal apparatus.
[FIG. 3] FIG. 3 is a diagram for describing association between a registered user ID and a wearing user ID.
[FIG. 4] FIG. 4 is a diagram illustrating an example of comfort level variation information on an item I1 for a wearing user U1.
[FIG.5] FIG. 5 is a diagram illustrating an example of comfort level variation information on an item I2 for a wearing user U1.
[FIG. 6] FIG. 6 is a diagram illustrating an example of comfort level variation information on an item I3 for a wearing user U1.
[FIG. 7] FIG. 7 is a diagram illustrating an example of a recommendation display screen.
[FIG. 8] FIG. 8 is a diagram illustrating a display example of a remeasurement request display element.
[FIG. 9] FIG. 9 is a diagram illustrating an example of highlight display of the remeasurement request display element.
[FIG. 10] FIG. 10 is a diagram illustrating another example of highlight display of the remeasurement request display element.
[FIG. 11] FIG. 11 is a diagram illustrating another example of highlight display of the remeasurement request display element.
[FIG. 12] FIG. 12 is a diagram illustrating another display example of the remeasurement request display element.
[FIG. 13] FIG. 13 is a diagram illustrating another example of highlight display of the remeasurement request display element.
[FIG. 14] FIG. 14 is a diagram illustrating another display example of the remeasurement request display element.
[FIG. 15] FIG. 15 is a diagram illustrating another example of highlight display of the remeasurement request display element.
[FIG. 16] FIG. 16 is a diagram illustrating another display example of the remeasurement request display element.
[FIG. 17] FIG. 17 is a diagram illustrating another example of highlight display of the remeasurement request display element.
[FIG. 18] FIG. 18 is a block diagram illustrating a functional configuration example of a server system.
[FIG. 19] FIG. 19 is a diagram illustrating a data configuration example of user management data.
[FIG. 20] FIG. 20 is a block diagram illustrating a functional configuration example of a terminal apparatus.
[FIG. 21] FIG. 21 is a flowchart illustrating a flow of processing in the server system.
[FIG.22] FIG. 22 is a diagram illustrating a recommendation display screen in a modification example.

### [DESCRIPTION OF EMBODIMENTS]

Hereinafter, preferred embodiments of the present invention will be described with reference to the drawings. It should be noted that the present invention is not limited to the embodiments described below, and the forms to which the present invention can be applied are not limited to the following embodiments. In addition, in the drawings, the same parts are denoted by the same reference signs.

### [Overall Configuration]

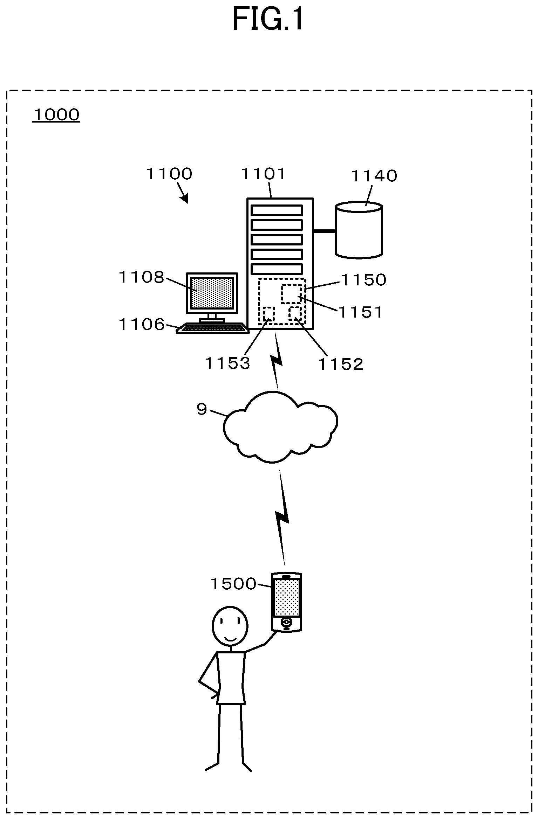

FIG. 1 is a diagram illustrating an overall configuration example of an online shopping system 1000 according to the present embodiment. As illustrated in FIG. 1, the online shopping system 1000 includes a server system 1100 and a terminal apparatus 1500, which are connected via a network 9 so as to be capable of data communication with each other. The online shopping system 1000 provides an online shopping service that sells wearable items to users. In the following description, shoes (low shoes), which are a type of footwear, will be taken as an example of an item. However, the same description can be applied to sale of shoes including boots (long shoes) as an item, and can also be applied to sale of other items such as clothing and hats.

The network 9 is a communication channel that enables data communications. Specifically, the network 9 includes a communication network such as a local area network (LAN) using a private line (a private cable) for direct connection, Ethernet (registered trademark), or the like, a telecommunication network, a cable network, the Internet, and the like. The communication method can be either wired or wireless.

The server system 1100 is a computer system including a main apparatus 1101, a keyboard 1106, a touch panel 1108, and a storage 1140. The main apparatus 1101 incorporates a control board 1150 on which are mounted various microprocessors such as a central processing unit (CPU) 1151, a graphics processing unit (GPU), and a digital signal processor (DSP), various IC memories 1152 such as VRAM, RAM, and ROM, and electronic components such as a communication device 1153. In addition, part or all of the control board 1150 may be implemented by an application specific integrated circuit (ASIC), a field-programmable gate array (FPGA), or a system on a chip (SoC).

By having the CPU 1151 and other devices perform calculations based on predetermined programs and data, the server system 1100 realizes a user management function of registering users and manages data by linking the users to accounts, and an online shopping function of providing online shopping services. This includes providing programs for the terminal apparatus 1500 to realize each function, and various data required to execute the programs. A user who has completed the registration procedure (registered user) accesses the server system 1100 with his/her own terminal apparatus 1500, logs in with the issued registered user ID, and performs online shopping.

Although FIG. 1 illustrates only one terminal apparatus 1500, in actual system operation, a plurality of terminal apparatuses 1500 can access the server system 1100 at the same time.

Although the server system 1100 is depicted as if it were a single server apparatus, it may be implemented by a plurality of apparatuses. For example, the server system 1100 may be configured such that a plurality of blade servers are connected together via an internal bus in a data communicable manner to share the functions. Further, the place where the hardware constituting the server system 1100 is installed is not limited. The server system 1100 may be configured such that a plurality of independent servers installed at distant places perform data communication via the network 9 to thereby function as the server system 1100 as a whole.

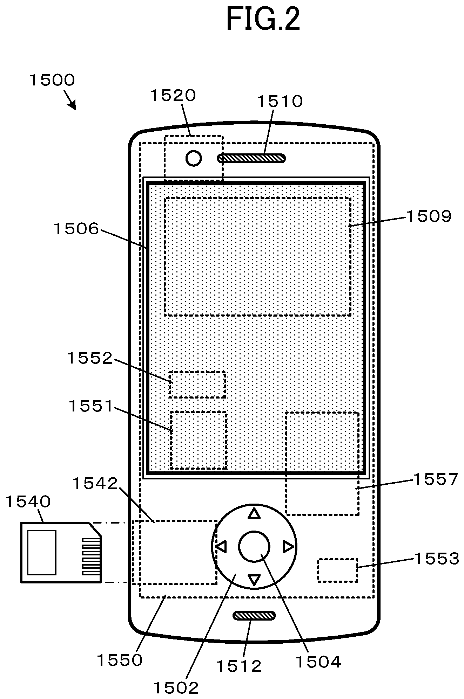

The terminal apparatus 1500 is a computer system that functions as a man-machine interface, and is connected to the network 9 via a communication base station or the like, and can perform data communication with the server system 1100. The terminal apparatus 1500 illustrated in FIG. 2 is classified as a smartphone, but may be a wearable computer such as a smartwatch, a portable game device, a tablet computer, a personal computer, or the like, as long as it is a computer. In a case where a plurality of electronic devices, such as a combination of a smartphone and a smartwatch connected to the smartphone, are organically linked to perform a single function, the plurality of electronic devices can be considered as a single terminal apparatus 1500.

FIG. 2 is a diagram illustrating an apparatus configuration example of a smartphone, which is an example of the terminal apparatus 1500. As illustrated in FIG. 2, the terminal apparatus 1500 includes a directional input key 1502, a home key 1504, a touch panel 1506 that functions as an image display device and a contact position input device, a built-in battery 1509, a speaker 1510, a microphone 1512, a camera 1520, a control board 1550, and a memory card reader 1542 that can read and write data from and into a memory card 1540, which is a computer-readable storage medium. In addition, the terminal apparatus 1500 also includes a power button, a volume control button, and the like (not illustrated).

The control board 1550 is equipped with various microprocessors such as a CPU 1551, GPU, and DSP, various IC memories 1552 such as VRAM, RAM, and ROM, a wireless communication module 1553 for wireless communication with mobile phone base stations and wireless communication base stations connected to the network 9, an interface circuit 1557, and the like. The interface circuit 1557 includes a circuit for receiving signals from the directional input key 1502 and the home key 1504, a driver circuit for the touch panel 1506, an output amplifier circuit for outputting audio signals to the speaker 1510, an audio signal generation circuit for generating audio signals collected by the microphone 1512, a circuit for inputting image signals captured by the camera 1520, a signal input/output circuit for the memory card reader 1542, and the like.

The elements mounted on the control board 1550 are electrically connected to each other via bus circuits or the like to enable reading and writing of data and sending and receiving of signals. Part or all of the control board 1550 may be configured using an ASIC, FPGA, or SoC. The control board 1550 stores programs and various data for realizing the functions of the terminal apparatus in the IC memory 1552.

In the present embodiment, the terminal apparatus 1500 is configured to download programs and various setting data from the server system 1100. Alternatively, the terminal apparatus 1500 may be configured to read the programs and data from a storage medium such as the memory card 1540 obtained separately.

### [Details]

### 1. User Management Function

In order to realize the user management function, the server system 1100 executes a process related to user registration (user registration process) and a process related to managing the data of registered users who have undergone the registration procedure and the data of wearing users associated with the registered users (data management process).

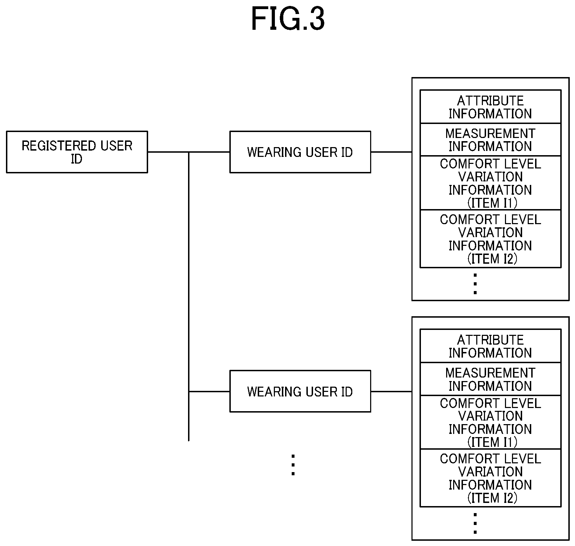

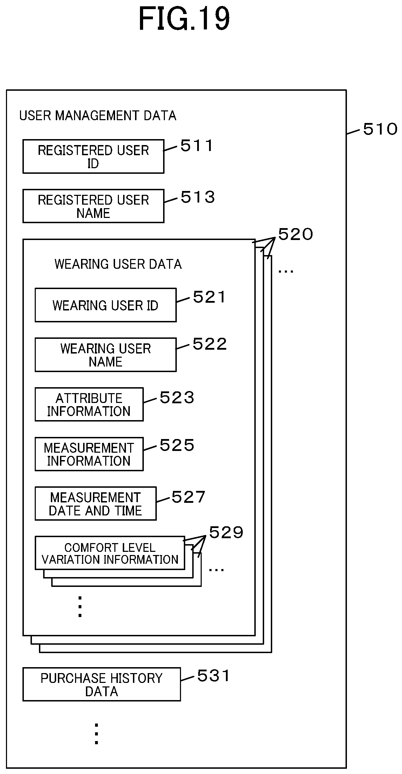

In the present embodiment, as illustrated in FIG. 3, the registered user ID of a registered user can be associated with the wearing user IDs of one or more wearing users. A registered user is a user who logs in with his/her registered user ID and conducts online shopping for various items such as shoes. On the other hand, a wearing user is a user who wears shoes purchased by a registered user. The wearing user may be the registered user himself/herself, a family member, or a friend. In the present embodiment, for ease of understanding, an example will be taken in which the wearing user is a child of a registered user. When a registered user registers a child as a wearing user, a wearing user ID is issued to the wearing user. Each wearing user ID is stored in association with user data about the wearing user (see wearing user data 520 in FIG. 19) acquired in a data acquisition process described later. The user data includes attribute information such as the age and gender of the wearing user, measurement information of the wearing user who has been measured on the body part (in the present embodiment, the foot) where the item (in the present embodiment, shoes) is worn, and comfort level variation information generated using the attribute information and measurement information of the wearing user. As will be described later, the comfort level variation information is generated for each user wearing an item (in the present embodiment, shoes sold through the online shopping service).

### 2. Online Shopping Function

To realize the online shopping function, the server system 1100 performs a data acquisition process to acquire user data related to the target user. In addition, when a registered user logs in, the server system 1100 responds to a product search request from the terminal apparatus 1500 and performs control to display product information on items that meet the conditions on the terminal apparatus 1500. Before displaying the product information, the server system 1100 performs a purchase target user setting process for setting a purchase target user. The server system 1100 executes: an estimation process of estimating the recommended size of each item related to the product information for the purchase target user as the target user in a case where the target user wears the item; a recommendation display control process of performing recommendation display control to display a recommendation display indicating the recommended size on the terminal apparatus 1500; and a remeasurement request display control process of additionally displaying a remeasurement request display element prompting for remeasurement on the terminal apparatus 1500 in which the recommendation display control is being performed.

### 2-1. Data Acquisition Process

In the data acquisition process, the server system 1100 acquires user data of the wearing user specified by the registered user on the terminal apparatus 1500 as the target user. For example, when the registered user registers a new wearing user or when the registered user wishes to reacquire measurement information about a wearing user, the registered user performs an operation to specify the wearing user as a target user.

In this case, the server system 1100 first acquires attribute information of the target user. The attribute information can be acquired by accepting input operations of age and gender on the terminal apparatus 1500.

Next, the server system 1100 acquires measurement information of the target user. The measurement information includes shape data of the body part (in the present embodiment, the foot) and growth change data of the body part. For example, the measurement information can be acquired by measuring a foot size using a measuring means capable of measuring the foot size. As an example, first, a predetermined mat on which a number of dots (markers) are drawn for measurement is prepared, and the target user's feet are placed on the mat and photographed from a plurality of directions by the terminal apparatus 1500. Then, a 3D model of the foot is created based on the dots (markers) on the mat from the photographic data, and various data (shape data) related to the shape of the target user's foot, such as the overall shape of the foot, the shape of the instep, foot size, foot width, and whether or not the foot is flat, are measured. However, a different method may be used as long as similar data can be acquired. For example, the target user's feet are placed on a flat surface and photographed from a plurality of directions using the terminal apparatus 1500, and photogrammetry processing is performed based on the photographic data to measure similar data. The measurement process may be executed by the terminal apparatus 1500, or may be executed by the server system 1100 after the server system 1100 acquires the photographic data. The difference in configuration is whether the terminal apparatus 1500 or the server system 1100 has the measurement means. Alternatively, similar data may be acquired by manually inputting numerical values of the target user's foot length or the like into the terminal apparatus 1500. In either case, the server system 1100 ultimately acquires the measurement data (measurement results). The server system 1100 then predicts growth changes in the target user's feet based on the measurement results and the target user's attribute information. For example, the foot size for each age (for example, age in months) after the measurement timing is predicted, and predicted changes in size for each age in months are obtained as growth change data. The server system 1100 acquires the obtained shape data and growth change data as measurement information of the target user.

The growth change data may be data on growth changes in the average foot size of children of the same gender (average foot size for each age in months). Alternatively, growth change data of children with fast growth rates (average foot size for each age in months) and growth change data of children with slow growth rates (average foot size for each age in months) may be prepared in advance, and the data (average value) corresponding to the growth rate of the target user may be used as the growth change data. Alternatively, in consideration of the average values exemplified above, growth changes may be predicted from the measurement results (that is, actual measurement values) obtained by the measurement means. Alternatively, growth changes may be predicted based on information about the target user entered by the registered user (for example, attribute information such as age and gender, height, weight, and the like), or images of the target user's body (here, the feet) (for example, images of the feet taken from various angles).

Upon acquisition of the measurement information, the server system 1100 generates comfort level variation information on each predetermined item (for example, shoes sold through an online shopping service) based on the item information of the item, the attribute information and measurement information of the target user, which indicates the variation in comfort level over time in a case where the target user wears the item. As for the attribute information and measurement information of the target user, both are not necessarily used, and either one of them may be used.

The item information includes specification information such as the name, item category, size range, material, dimensions, and weight of the item, information on the purchaser's evaluation of the item, and the like. In the case of using the evaluation information to generate the comfort level variation information, for example, information on evaluations of the item made by registered users who have registered children as wearing users whose attribute information and measurement information are similar to that of the target user, is extracted and used to generate the comfort level variation information. Specifically, in generating a comfort level graph described later, the shape of the parabola can be adjusted using the evaluation information to make the shape steeper or gentler.

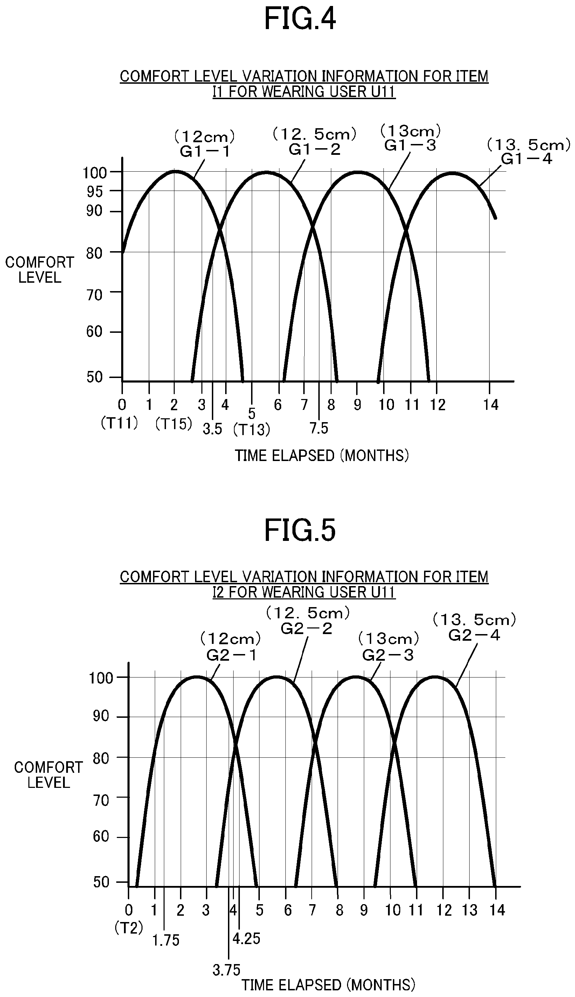

FIGS. 4, 5, and 6 are diagrams illustrating examples of comfort level variation information on a wearing user U1 as the target user, generated for each of items (shoes) I1, I2, and I3. In the present embodiment, the comfort level variation information is generated that represents the comfort level at each time point during a predetermined target period (up to 14 months in the example of FIG 4 and others) starting from the measurement timing related to the measurement information of the target user (wearing user U1) (that is, the previous measurement timing when the previous measurement was performed on the wearing user U1), using values ranging from "0 (very bad)" to "100 (very good)", for example. In FIG. 4 and others, only the portions of the generated comfort level variation information where the comfort level is 50 or higher are extracted and illustrated.

Focusing on one item, when generating the comfort level variation information, the server system 1100 performs the following process for each size in accordance with the size range of the target item, for example. That is, first, based on the measurement information of the target user (here, wearing user U1), the time point (estimated best-fit time point) is set at which the size is thought to be most suitable for the target user when wearing the item in that size. Next, the comfort level at the estimated best-fit time point is set to 100, and a parabolic graph with the estimated best-fit time point as the apex is generated as a graph of the comfort level for that size. In this case, the item information is used to adjust the shape of the parabola of the graph to be generated (as to whether the parabola has a gentle slope or a steep slope). The above process is repeated for each size to generate a comfort level graph for each size, thereby obtaining the comfort level variation information.

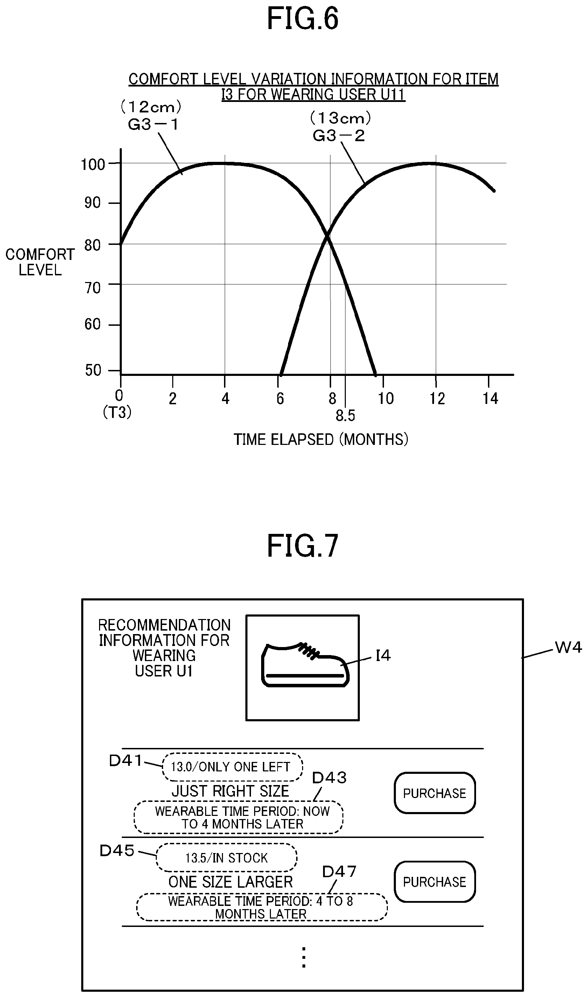

For example, FIG. 4 illustrates an example in which the comfort level variation information on the item I2 is generated, which includes a comfort level graph G1-1 in a case where the wearing user U1 wears the item I2 of 12 cm, a comfort level graph G1-2 in a case where the wearing user U1 wears the item I2 of 12.5 cm, a comfort level graph G1-3 in a case where the wearing user U1 wears the item I2 of 13 cm, and a comfort level graph G1-4 in a case where the wearing user U1 wears the item I2 of 13.5 cm. Similarly, FIG. 5 illustrates an example in which the comfort level variation information on the item I2 is generated, which includes a comfort level graph G2-1 in a case where the wearing user U1 wears the item I2 of 12 cm, a comfort level graph G2-2 in a case where the wearing user U1 wears the item I2 of 12.5 cm, a comfort level graph G2-3 in a case where the wearing user U1 wears the item I2 of 13 cm, and a comfort level graph G2-4 in a case where the wearing user U1 wears the item I2 of 13.5 cm. FIG. 6 illustrates an example in which the comfort level variation information on the item I3 is generated, which includes a comfort level graph G3-1 in a case where the wearing user U1 wears the item I3 of 12 cm, and a comfort level graph G3-2 in a case where the wearing user U1 wears the item I3 of 13 cm.

On a comparison between the item I1 in FIG. 4 and the item I2 in FIG. 5, even though the sizes are the same, if the item I2 is designed to be smaller (for example, if the item I2 is made of a material that does not stretch easily), the item I2 will be wearable comfortably for a shorter period of time than the item I1. Therefore, in generating a comfort level graph for each size, the server system 1100 adjusts the shape of the parabola to be steeper for items that are designed to be tight (for example, the item I2).

Conversely, on a comparison between items of the same size, if one item is designed to be larger (for example, if one item is made of a material that stretches easily), the item will be wearable comfortably for a longer period of time than the other item. Therefore, in generating a comfort level graph for each size, the server system 1100 adjusts the shape of the parabola to be gentler for items that are designed to be larger.

Furthermore, on a comparison between items, the size increments of one item may be larger than the size increments of the other item. For example, the size of the item I3 in FIG. 6 is in 1 cm increments, whereas the size of the item I1 in FIG. 4 and the size of the item I2 in FIG. 5 are in 0.5 cm increments. Therefore, when generating a comfort level graph for each size, the server system 1100 adjusts the shape of the parabola to be gentler for items with larger size increments than for items with smaller size increments.

The measurement information and the comfort level variation information are acquired each time a measurement related to the measurement information is made on the target user, and are updated to the latest information.

The comfort level variation information may also be generated in consideration of the target user's preferences regarding wearing items (for example, whether they like larger items or slimmer items). Specifically, for example, from the evaluation information included in the item information, information on evaluation of comfort of children who have similar preferences to the target user may be extracted and used to generate the comfort level variation information. Specifically, in generating a comfort level graph for each size, the shape of the parabola can be adjusted using the evaluation information to make the shape steeper or gentler.

### 2-2. Purchase Target User Setting Process

In the purchase target user setting process, the server system 1100 sets a purchase target user in online shopping based on an operation input on the terminal apparatus 1500. The registered user performs an operation to select a wearing user (child) associated with the registered user. The server system 1100 sets the selected wearing user as a purchase target user.

### 2-3. Estimation Process

In the present embodiment, the server system 1100 executes the estimation process, and the subsequent recommendation display control process and remeasurement request display control process for the target user who is the purchase target user set in the purchase target user setting process. Hereinafter, each process will be described taking as an example the case where the wearing user U1 related to the comfort level variation information in FIGS. 4 to 6 is the target user (where the parent registered user selects the wearing user U1 as the purchase target user).

In the estimation process, the server system 1100 estimates the recommended size of an item when worn by the target user (here, the wearing user U1, for example), based on the measurement information of the target user. In the present embodiment, for each item (hereinafter also referred to as an "estimation target item") related to product information to be displayed on the terminal apparatus 1500 in response to the registered user's product search, a first recommended size that satisfies a predetermined comfort level condition during a first comfortable period and a second recommended size that satisfies the comfort level condition during a second comfortable period whose start time is later than the start time of the first comfortable period are estimated as the recommended sizes for the target user when wearing the estimation target item. Specifically, the server system 1100 estimates the first recommended size and the second recommended size using the comfort level variation information generated for the estimation target item based on the measurement information and the like. In this case, the comfort level condition can be "the comfort level in the comfort level variation information of the estimation target item related to the target user is 80 or higher", for example.

For example, if the estimation target item is the item I1, the comfort level variation information illustrated in FIG. 4 is used to estimate the first recommended size and the second recommended size for the wearing user U1. As described above, the comfort level variation information is generated when the measurement information related to the target user (wearing user U1 in FIG. 4) is acquired, and indicates the comfort level at each time point during a predetermined period from the measurement timing related to the measurement information (previous measurement timing). Therefore, in the estimation process, the current time point is used as a reference timing, and the comfort level variation information after the reference timing is referenced. For example, if the registered user searches for product information immediately after measurement is made on the target user, the reference timing is time point T11 at which the elapsed time in FIG. 4 is 0 (previous measurement timing). In this case, the graphs G1-1 to G1-4 of the comfort level variation information illustrated in FIG. 4 are referenced. First, looking at the graph G1-1, the comfort level is 80 or higher in the period from the reference timing T11 to four months later. Therefore, the server system 1100 determines the period as the first comfortable period for the wearing user U1, and estimates the first recommended size of the item I1 during the first comfortable period to be the size (12 cm) corresponding to the graph G1-1. Also, looking at the graph G1-2, the comfort level is 80 or higher in the period from 3.5 months to 7.5 months after the reference timing T11. Therefore, the server system 1100 determines the period as the second comfortable period for the wearing user U1, and estimates the second recommended size of the item I1 during the second comfortable period to be the size (12.5 cm) corresponding to the graph G1-2. Similar estimations are made for the graphs G1-3 and G1-4.

On the other hand, for example, if the registered user searches for product information at time point T13 that is five months after the previous measurement timing, the time point T13 that is five months later is set as the reference timing, and the graphs G1-2 to G1-4 of the comfort level variation information in FIG. 4, which are the part of the comfort level variation information from the reference timing T13 onwards, are referenced. First, looking at the graph G1-2, the comfort level is 80 or higher in the period from the reference timing T13 to 2.5 months later (7.5 months later than the previous measurement timing). Therefore, the server system 1100 determines the period as the first comfortable period for the wearing user U1, and estimates the first recommended size of the item I1 during the first comfortable period to be the size (12.5 cm) corresponding to the graph G1-2. Furthermore, looking at the graph G1-3, the comfort level is 80 or higher in the period from two months after the reference timing T13 (seven months after the previous measurement timing) to six months after the reference timing T13 (eleven months after the previous measurement timing). Therefore, the server system 1100 determines the period as the second comfortable period for the wearing user U1, and estimates the second recommended size of the item I1 during the second comfortable period to be the size (13 cm) corresponding to the graph G1-3.

Similarly, if the estimation target item is the item I2, the comfort level variation information illustrated in FIG. 5 is used to estimate the first recommended size and the second recommended size for the wearing user U1. For example, if the time point T2, which is the previous measurement timing, is set as the reference timing, the graphs G2-1 to G2-4 of the comfort level variation information illustrated in FIG. 5 are referenced. Looking at the graph G2-1, the comfort level is 80 or higher in the period from 1 month to 4.25 months after the reference timing T2. Therefore, the server system 1100 determines the period as the first comfortable period for the wearing user U1, and estimates the first recommended size of the item I2 during the first comfortable period to be the size corresponding to the graph G2-1. In this example, the size range of the item I2 starts from 12 cm, and there is no size that the wearing user U1 can wear comfortably at the reference timing T2. Similar estimations are made for the graphs G2-2 to G2-4.

If the estimation target item is the item I3, the comfort level variation information illustrated in FIG. 6 is used to estimate the first recommended size and the second recommended size for the wearing user U1. For example, if the time point T3, which is the previous measurement timing, is set as the reference timing, the graphs G3-1 and G3-2 of the comfort level variation information illustrated in FIG. 6 are referenced. Looking at the graph G3-1, the comfort level is 80 or higher during the period from the reference timing T3 to eight months later. Therefore, the server system 1100 determines the period as the first comfortable period for the wearing user U1, and estimates the first recommended size of the item I3 during the first comfortable period to be the size corresponding to the graph G3-1. Similar estimations are made for the graph G3-2.

A threshold for the comfort level that serves as a comfort level condition may be set for each registered user. For example, if a registered user wishes to purchase an item that can be worn for as long as possible even though there is a slight difference in sizes between the target user's feet and the item, the threshold for the comfort level may be set to 70. For example, if the estimation target item is the item I3 and the previous measurement time point T3 is set as the reference timing, looking at the graph G3-1 in FIG. 6, the comfort level is 70 or higher in the period from the reference timing T3 to 8.5 months later. Therefore, the server system 1100 determines the period as the first comfortable period for the wearing user U1, and determines the first recommended size of the item I3 during the first comfortable period to be the size corresponding to the graph G3-1.

Alternatively, for example, if priority is placed on the ease of movement when the registered user wears the item, the threshold for the comfort level can be set to a high value, such as 90 or 95, for example. For example, if the estimation target item is the item I1 and the previous measurement time point T11 is set as the reference timing, looking at the graph G1-1 in FIG. 4, the comfort level is 95 or higher in the period from one month to three months after the reference timing T11. Therefore, the server system 1100 determines the period as the first comfortable period for the wearing user U1, and determines the first recommended size of the item I1 during the first comfortable period to be the size (12 cm) corresponding to the graph G1-1. Furthermore, if the estimation target item is the item I2 and the previous measurement time point T2 is set as the reference timing, looking at the graph G2-1 in FIG. 5, the comfort level is 90 or higher in the period from 1.75 months to 3.75 months after the reference timing T2. Therefore, the server system 1100 determines the period as the first comfortable period for the wearing user U1, and determines the first recommended size of the item I2 during the first comfortable period to be the size corresponding to the graph G2-1.

Settings for each registered user, such as whether the user prioritizes the item wearable for as long as possible or whether the user prioritizes ease of movement even if the item needs to be replaced more frequently, can be realized by accepting input from the registered user in a questionnaire in advance, for example.

Furthermore, a threshold for the comfort level that serves as a comfort level condition may be set in advance according to the category of the item. For example, if the category of the item I1 is "sports shoes", the threshold for the comfort level may be set to 95, with an emphasis on the user's ease of movement when wearing the shoes.

Furthermore, a threshold for the comfort level that serves as a comfort level condition may be set according to the items worn by the target user in the past. For example, if the item is replaced (with a larger-sized one) when the comfort level falls below 90, the threshold for the comfort level may be set to 90. This setting can be achieved by obtaining the date and time when the item was replaced from purchase history data 531 of the registered user (see FIG. 19).

Furthermore, setting of the threshold value for the comfort level (that is, setting of the comfort level condition) may be performed by accepting an input operation of the threshold from the registered user.

### 2-4. Recommendation Display Control Process

In the recommendation display control process, the server system 1100 performs recommendation display control to display, together with a first recommendation display indicating the first recommended size estimated for the target user in the estimation process, a second recommendation display indicating the second recommended size on the terminal apparatus 1500.

Thereafter, the server system 1100 executes a recommendation display control process, and performs recommendation display control to display the first recommendation display and the second recommendation display on the terminal apparatus 1500 for the target user who is the purchase target user set in the purchase target user setting process. In the present embodiment, the server system 1100 performs recommendation display control by controlling the provision of a first comfortable period display indicating the first comfortable period in association with the first recommendation display, and controlling the provision of a second comfortable period display indicating the second comfortable period in association with the second recommendation display.

FIG. 7 is a diagram illustrating an example of a recommendation display screen displayed on the terminal apparatus 1500 by the recommendation display control. As illustrated in FIG. 7, displayed on a recommendation display screen W4 are the first recommended size and first comfortable period, and the second recommended size and second comfortable period for each item that is determined to be an estimation target item in the estimation process, through the recommendation display control performed by the server system 1100. FIG. 7 illustrates a display example for one item I4, in which a first recommended size D41 of the item I4 estimated for the target user (wearing user U1 in FIG. 7) when wearing the item I4, and a first comfortable period D43 during which the item I4 of the first recommended size can be worn comfortably. Together with the display of the first recommended size and first comfortable period, a second recommended size D45 of the item I4 estimated for the target user (wearing user U1) when wearing the item I4 and a second comfortable period D47 during which the item I4 of the second recommended size can be worn comfortably are also displayed.

Note that, if recommended sizes are estimated for comfortable periods whose start times are later than the start time of the second comfortable period, these may also be displayed. For example, in the example of FIG. 4, in addition to displaying the first recommended size and first comfortable period based on the graph G1-1 and the second recommended size and second comfortable period based on the graph G1-2, it is also possible to display the recommended size and comfortable period based on the graph G1-3, and the recommended size and comfortable period based on the graph G1-4.

Furthermore, the current comfort level may be displayed for items of the first recommended size. For example, in the example of FIG. 4, if the reference timing is T11, the comfort level for the first recommended size is displayed as "80". If time point T15 at which the elapsed period is 2 in FIG. 4 is the reference timing, the comfort level for the first recommended size is displayed as "100".

Alternatively, only the recommended sizes (first recommended size, second recommended size, and the like) may be displayed, and the comfortable periods (first comfortable period, second comfortable period, and the like) may not be displayed. Alternatively, the display related to the second recommended size (second recommended size and second comfortable period) may not be displayed, and only the display related to the first recommended size (first recommended size and first comfortable period) may be displayed. Alternatively, the display related to the first recommended size (first recommended size and first comfortable period) and the second recommended size may be displayed, and the second comfortable period may not be displayed.

### 2-5. Remeasurement Request Display Control Process

In the remeasurement request display control process, the measurement timing (the previous measurement timing when the previous measurement was performed for the target user) related to the measurement information of the target user for whom the recommendation display control is performed by the recommendation display control process, is determined. Then, if the number of days elapsed since the determined measurement timing satisfies a first remeasurement request interval condition, the server system 1100 performs control to additionally display a remeasurement request display element prompting for remeasurement on the terminal apparatus 1500 in which the recommendation display control is performed. In addition, if the number of days elapsed since the determined measurement timing satisfies a second remeasurement request interval condition that has a longer interval than the first remeasurement request interval condition, the server system 1100 also performs highlight display control to highlight the remeasurement request display element.

If measurements related to the measurement information have not been performed on the target user for a long period of time and the measurement information becomes outdated, the comfort level graph indicated by the comfort level variation information will no longer match the actual foot size of the target user, increasing the risk of a decrease in the estimation accuracy of the first recommended size and second recommended size estimated based on the comfort level variation information.

Therefore, in the present embodiment, the first remeasurement request interval condition is set to "three months or more", for example. Then, the server system 1100 controls the display of a remeasurement request display element when three months have elapsed since the previous measurement timing of the target user. The second remeasurement request interval condition is set to "six months or more", for example. If six months have elapsed since the target user's previous measurement timing, the server system 1100 highlights the remeasurement request display element. Examples of displaying and highlight display of a remeasurement request element are shown below.

### (Example 1)

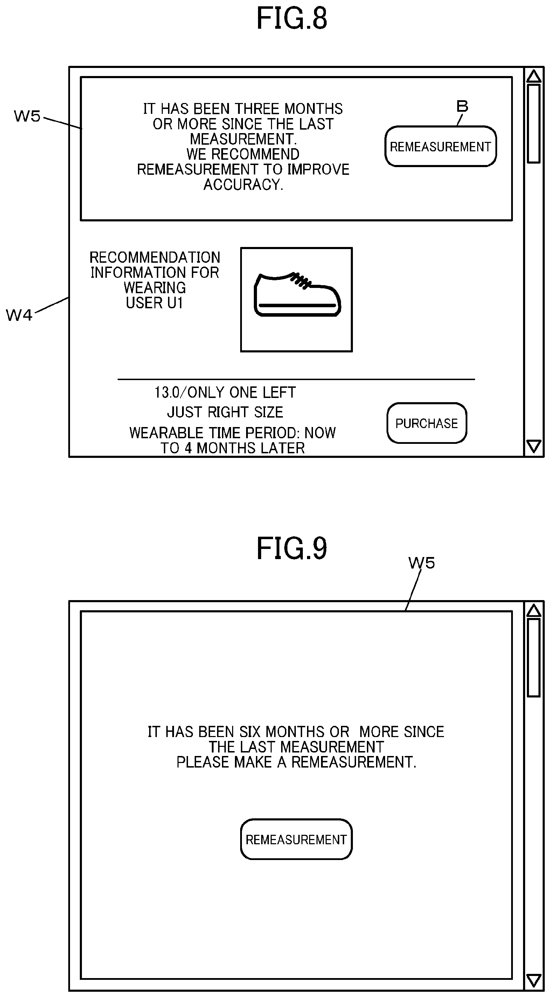

FIG. 8 is a diagram illustrating an example of display control of a remeasurement request display element W5 in Example 1. FIG. 9 is a diagram illustrating an example of highlight display control of the remeasurement request display element W5. In this example, if three months or more have elapsed since the previous measurement timing and the first remeasurement request interval condition is satisfied, the server system 1100 additionally displays the remeasurement request display element W5 on the recommendation display screen W4 illustrated in FIG. 7 (FIG. 8). FIG. 8 illustrates an example in which the remeasurement request display element W5 is displayed at the top of the recommendation display screen W4 so as not to overlap with the display contents of the recommendation display screen W4 (see FIG. 7). The display position of the remeasurement request display element W5 is not limited to the top of the screen.

The remeasurement request display element W5 includes a message prompting for remeasurement, and a remeasurement button B as an execution instruction element for reacquiring measurement information. If the registered user of the terminal apparatus 1500 wishes to proceed with reacquisition, he or she selects the remeasurement button B and performs the necessary input operations for measuring the target user.

Accordingly, if the target user has not been measured for three months or more, the remeasurement request display element W5 can be additionally displayed on the recommendation display screen W4 where the recommended size for the target user is displayed, thereby prompting for a measurement of the target user.

If six months or more have elapsed since the previous measurement timing and the second remeasurement request interval condition is satisfied, the server system 1100 highlights the remeasurement request display element W5. In this example, the server system 1100 performs display control to increase the display size of the remeasurement request display element W5 as highlight display control. For example, the server system 1100 performs control to display the remeasurement request display element W5 in a size expanded (maximized) across the entire screen, as illustrated in FIG. 9. When the display screen illustrated in FIG. 9 is scrolled downward, the recommendation display screen W4 is displayed.

Accordingly, when six months or more have elapsed without a remeasurement of the target user, the remeasurement request display element W5 can be displayed more prominently on the terminal apparatus 1500, making it possible to strongly prompt the registered user to remeasure the target user.

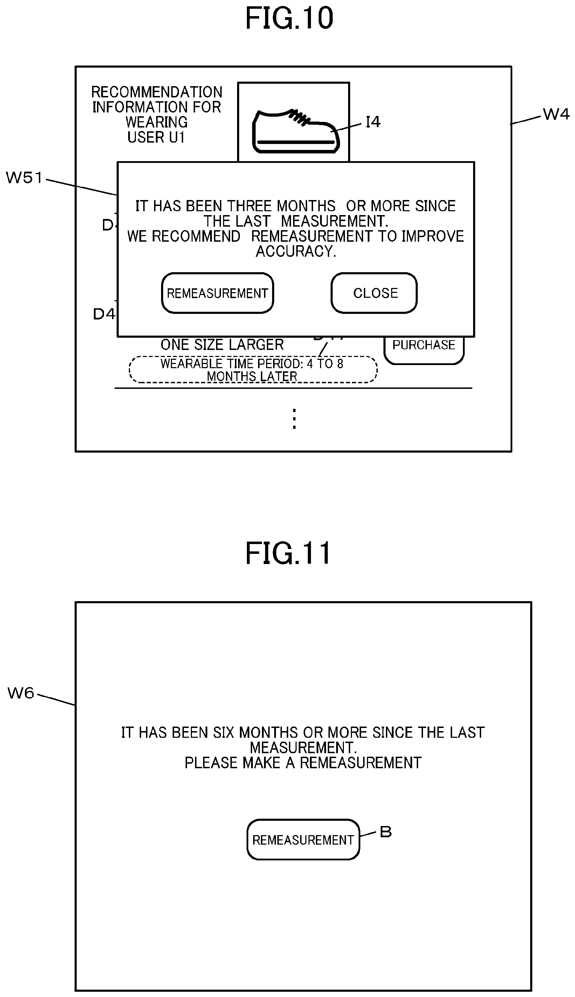

The highlight display control may be performed by superimposing the remeasurement request display element on the front side of the recommendation display screen W4. FIG. 10 is a diagram illustrating an example of display control of a remeasurement request display element W51 in this case. As in this example, the remeasurement request display element W51 may be displayed as a pop-up window on the recommendation display screen W4 illustrated in FIG. 7.

### (Example 2)

FIG. 11 is a diagram illustrating an example of highlight display control of a remeasurement request display element W6 in Example 2. In this example, if the number of days elapsed since the previous measurement timing satisfies a second remeasurement request interval condition, the server system 1100 controls the display content (here, a recommendation display screen) behind the remeasurement request display element W6 to be hidden. FIG. 11 illustrates an example in which the remeasurement request display element W6 is displayed on the entire screen instead of the recommendation display screen (that is, the screen is transitioned from the original screen to the remeasurement request display element W6 screen), whereby the recommendation display screen is hidden. Once the registered user has selected the remeasurement button B and completed the measurement on the target user, the registered user will be able to view the recommendation display screen.

Although an example has been taken in which the display content behind the remeasurement request display element W6 is hidden, control may be performed instead to display the content in a manner that makes it difficult to see. For example, as in Example 1, in a mode in which the recommendation display screen W4 is displayed when the display screen illustrated in FIG. 9 is scrolled downward, the display of the recommendation display screen W4 may be controlled to be blurred or to be displayed in a color mixed with the background color.

### (Example 3)

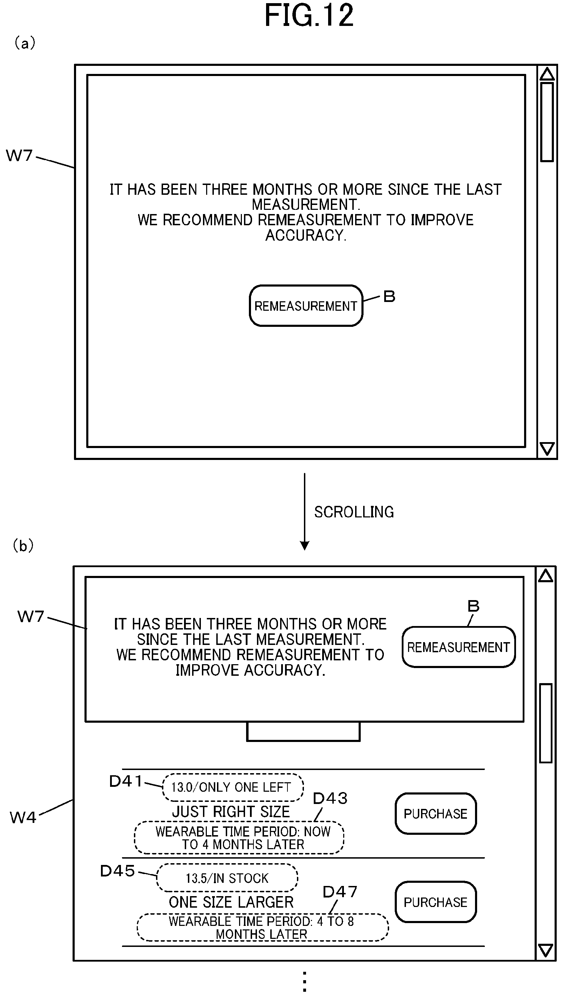

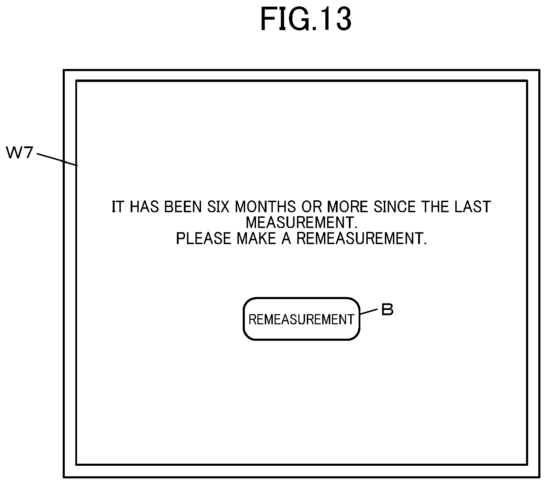

FIG. 12 is a diagram illustrating an example of display control of a remeasurement request display element W7 in Example 3. FIG. 13 is a diagram illustrating an example of highlight display control of the remeasurement request display element W7 in Example 3. In this example, if the number of counted days since the previous measurement timing satisfies the first remeasurement request interval condition, the server system 1100 displays the remeasurement request display element W7 in a maximized size (FIG. 12A).

When a scroll operation is performed on the terminal apparatus 1500, the server system 1100 displays the remeasurement request display element W7 as a floating window at the top of the recommendation display screen W4, as illustrated in FIG. 12B. In this example, after one scroll operation is performed, the remeasurement request display element W7 is always displayed at the top of the screen to prompt the registered user to make a remeasurement. The display position of the remeasurement request display element W7 is not limited to the top of the screen.

Furthermore, if the number of counted days since the previous measurement timing satisfies the second remeasurement request interval condition, the server system 1100 highlights the remeasurement request display element W7. In this example, as illustrated in FIG. 13, the remeasurement request display element W7 is displayed in a maximized size in the same manner as in FIG. 12A. However, unlike the case of FIG. 12, the server system 1100 does not accept a scroll operation but keeps the remeasurement request display element W7 displayed, thereby highlighting the remeasurement request display element W7. Once the registered user has selected the remeasurement button B and completed the measurement on the target user, the registered user will be able to view the recommendation display screen.

### (Example 4)

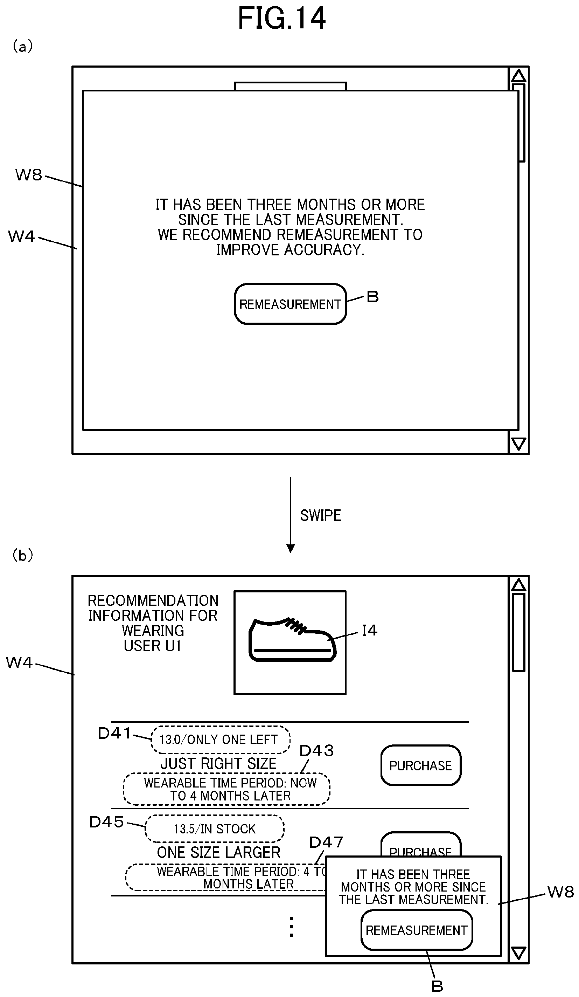

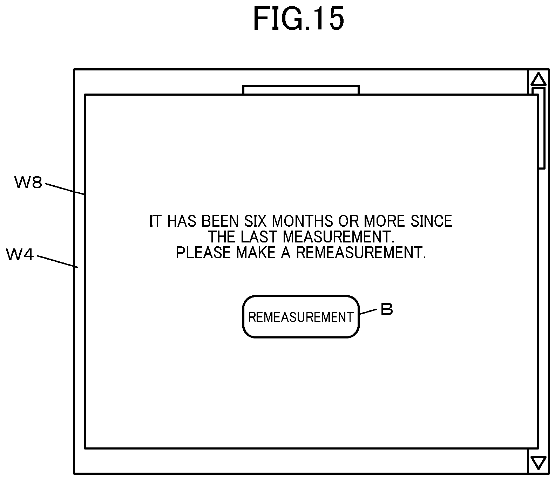

FIG. 14 is a diagram illustrating an example of display control of a remeasurement request display element W8 in Example 4. FIG. 15 is a diagram illustrating an example of highlight display control of the remeasurement request display element W8 in Example 4. In this example, if the number of days elapsed since the previous measurement timing satisfies the first remeasurement request interval condition, the server system 1100 displays the remeasurement request display element W8 as a pop-up window in a maximized size on the recommendation display screen W4 (FIG. 14A).

When a swipe operation is performed on the terminal apparatus 1500, the server system 1100 displays a remeasurement request display element W8 as a floating window at the lower right corner of the recommendation display screen W4, as illustrated in FIG. 14B. In this example, after one swipe operation is performed, the remeasurement request display element W8 is always displayed at the lower right corner of the screen to prompt the registered user to make a remeasurement. The display position of the remeasurement request display element W8 is not limited to the lower right corner of the screen.

Furthermore, if the number of days elapsed since the previous measurement timing satisfies the second remeasurement request interval condition, the server system 1100 highlights the remeasurement request display element W8. In this example, as illustrated in FIG. 15, the remeasurement request display element W8 is displayed as a pop-up window in a maximized size in the same manner as in FIG. 14A. However, unlike the case of FIG. 14, the server system 1100 does not accept a swipe operation but keeps the remeasurement request display element W8 displayed, thereby highlighting the remeasurement request display element W8. Once the registered user has selected the remeasurement button B and completed the measurement on the target user, the registered user will be able to view the recommendation display screen W4.

### (Example 5)

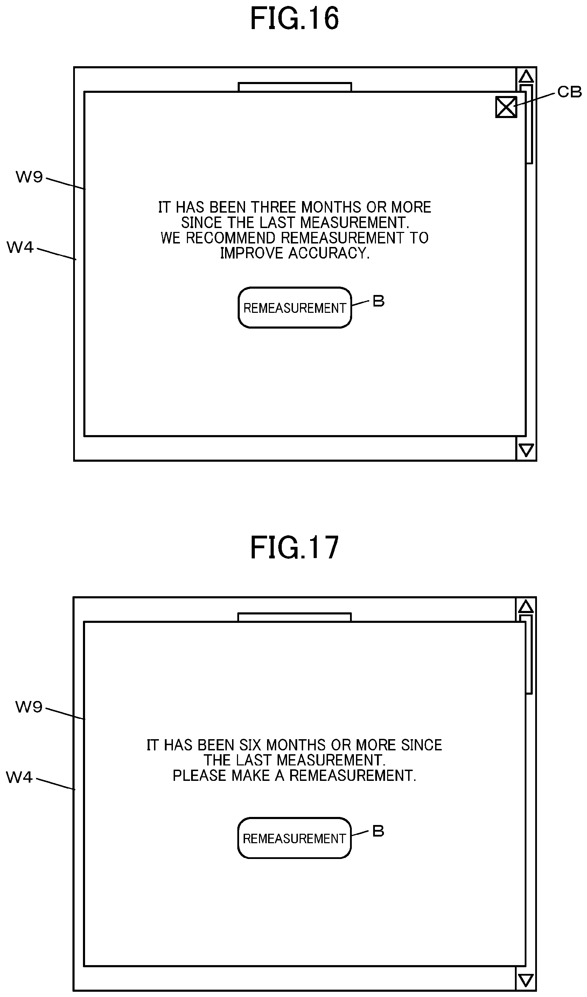

FIG. 16 is a diagram illustrating an example of display control of a remeasurement request display element W9 in Example 5. FIG. 17 is a diagram illustrating an example of highlight display control of the remeasurement request display element W9 in Example 5. In this example, if the number of days elapsed since the previous measurement timing satisfies the first remeasurement request interval condition, the server system 1100 displays the remeasurement request display element W9 as a pop-up window in a maximized size on the recommendation display screen W4, as illustrated in FIG. 16.

Here, the remeasurement request display element W9, which is displayed when the number of days elapsed since the previous measurement timing satisfies the first remeasurement request interval condition, includes the remeasurement button B as an execution instruction element and a display cancel button CB as a display cancel instruction element. If the registered user wishes to reacquire the measurement information, the registered user selects the remeasurement button B. On the other hand, if the registered user does not wish to reacquire the measurement information, the display of the remeasurement request display element W9 is cleared by pressing the display cancel button CB (the pop-up window of the remeasurement request display element W9 is closed). This allows the recommendation display screen W4 to be viewed.

Furthermore, if the number of days elapsed since the previous measurement timing satisfies the second remeasurement request interval condition, the server system 1100 highlights the remeasurement request display element W9. In this example, as illustrated in FIG. 17, the remeasurement request display element W9 is displayed as a pop-up window in a maximized size in the same manner as in FIG. 16. However, unlike the case of FIG. 16, the server system 1100 does not display the display cancel button CB but displays the remeasurement request display element W9. Therefore, the registered user cannot postpone reacquisition of the measurement information unlike the case of FIG. 16. Once the registered user has selected the remeasurement button B and completed the measurement on the target user, the registered user will be able to view the recommendation display screen W4. The display cancel button CB is not limited to not being displayed, and may be disabled while still being displayed, so that it cannot be selected.

### [Functional Configuration]

### 1. Server System

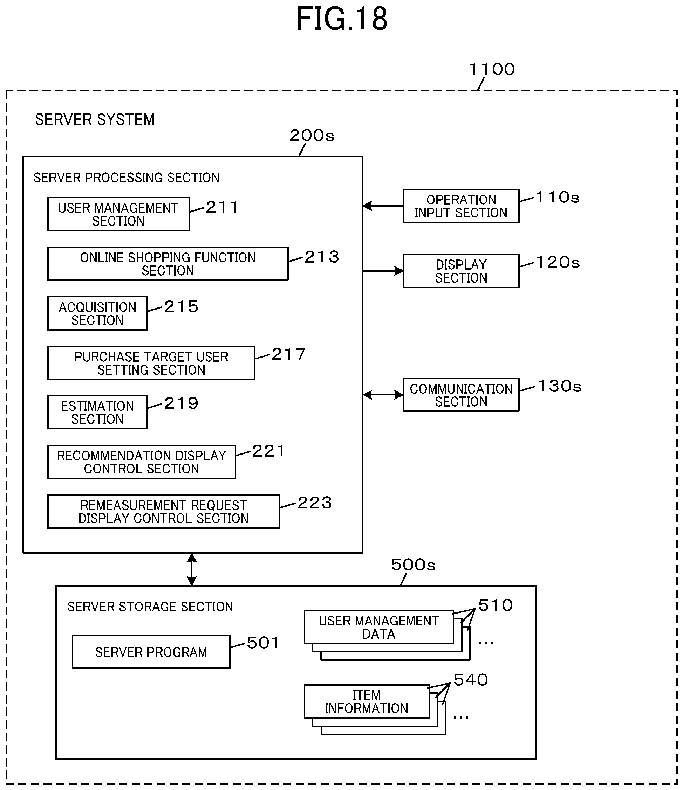

FIG. 18 is a block diagram illustrating a functional configuration example of the server system 1100. As illustrated in FIG. 18, the server system 1100 of the present embodiment includes an operation input section 110s, a display section 120s, a communication section 130s, a server processing section 200s, and a server storage section 500s.

The operation input section 110s is implemented by an input device such as a keyboard, a mouse, or a touch panel, for example, and outputs an operation signal according to the operation input to the server processing section 200s. Referring to FIG. 1, the keyboard 1106 and the touch panel 1108 correspond to this.

The display section 120s is implemented by a display device such as a liquid crystal display (LCD) or a touch panel, for example, and provides various types of display in response to display signals from the server processing section 200s. Referring to FIG. 1, the touch panel 1108 corresponds to this.

The communication section 130s is implemented by a wired or wireless communication device, and connects to the network 9 to communicate with an external device (for example, the terminal apparatus 1500). For example, the communication section 130s can be implemented by a wireless communication device, a modem, a terminal adapter (TA), a jack for a wired communication cable, a control circuit, or the like. Referring to FIG. 1, the communication device 1153 corresponds to this.

The server processing section 200s can be implemented by a processor, which is an arithmetic circuit such as a CPU, GPU, ASIC, and FPGA, and electronic components such as IC memory, for example, and controls the input and output of data between each part of the device, including the operation input section 110s and the server storage section 500s. The server processing section 200s performs various calculation processes based on predetermined programs and data, operation input signals from the operation input section 110s, data received from the terminal apparatus 1500, and the like to comprehensively control the operations of the server system 1100. Referring to FIG. 1, the control board 1150 and the CPU 1151 correspond to this.

The server processing section 200s also includes a user management section 211, an online shopping function section 213, an acquisition section 215, a purchase target user setting section 217, an estimation section 219, a recommendation display control section 221, and a remeasurement request display control section 223.

The user management section 211 executes user registration processing and data management processing, and manages data linked to registered user IDs. In the present embodiment, the user management section 211 manages, for each registered user, user data such as association of the registered user with the wearing user, attribute information, measurement information, and comfort level variation information about the wearing user acquired as needed.

The online shopping function section 213 performs processing related to the provision of online shopping services. Registered users can use the online shopping function implemented by the processing here to purchase items that can be worn by the user (in the present embodiment, shoes to be worn by the wearing user). In the present embodiment, the online shopping function section 213 responds to a product search request from a registered user and searches for items to be presented as product information for the purchase target user to the registered user. Then, the online shopping function section 213 causes the terminal apparatus 1500 to display the product information on the corresponding item.

The acquisition section 215 is a functional section that executes data acquisition processing, and acquires user data of a target user who is a wearing user associated with a registered user. To acquire user data, a separate measurement means is used to measure the body part (in the present embodiment, the foot) where the item (in the present embodiment, shoes) is worn. The acquisition section 215 then acquires measurement information and generates comfort level variation information based on the results of measurement by the measurement means.

The purchase target user setting section 217 is a functional section that executes a purchase target user setting process, and sets a purchase target user based on an operation input to the terminal apparatus 1500. When a registered user purchases an item to be worn by a wearing user associated with himself/herself, the registered user performs a selection operation to designate the wearing user as a purchase target user.

The estimation section 219 is a functional section that executes estimation processing. In the present embodiment, the estimation section 219 sets the purchase target user set in the purchase target user setting process, as the target user. Then, prior to the display of product information by the online shopping function section 213, the estimation section 219 sets the item related to the product information as the estimation target item, and estimates, as the recommended sizes for the target user to wear the item, the first recommended size that satisfies a predetermined comfort level condition during the first comfortable period, and the second recommended size that satisfies the comfort level condition during the second comfortable period whose start time is later than the start time of the first comfortable period.

The recommendation display control section 221 is a functional section that executes recommendation display control processing. In the present embodiment, the recommendation display control section 221 sets the purchase target user set in the purchase target user setting process, as the target user. Then, at the time of display of product information by the online shopping function section 213, the recommendation display control section 221 performs recommendation display control to display the first recommendation display indicating the first recommended size estimated by the estimation section 219 and the second recommendation display indicating the second recommended size, for the item related to the product information, on the terminal apparatus 1500.

The remeasurement request display control section 223 is a functional section that executes a remeasurement request display control process. In the present embodiment, the remeasurement request display control section 223 determines the measurement timing (previous measurement timing) related to the acquired measurement information on the target user of the recommendation display control performed by the recommendation display control section 221. Then, if the number of days elapsed since the previous measurement timing satisfies the first remeasurement request interval condition, the remeasurement request display control section 223 performs control to additionally display a remeasurement request display element prompting for remeasurement on the terminal apparatus 1500 in which the recommendation display control is performed. In addition, if the number of days elapsed since the determined measurement timing satisfies the second remeasurement request interval condition that has a longer interval than the first remeasurement request interval condition, the remeasurement request display control section 223 also performs highlight display control to highlight the remeasurement request display element.

The server storage section 500s stores programs for operating the server system 1100 and implementing the various functions of the server system 1100, data used during execution of these programs, and the like. These are stored in advance or temporarily stored each time processing is performed. For example, the server storage section 500s can be implemented by IC memory such as RAM or ROM, magnetic disks such as hard disks, optical disks such as CD-ROMs or DVDs, or the like. Referring to FIG. 1, the IC memory 1152 and the storage 1140 correspond to this.

The server storage section 500s also stores a server program 501, user management data 510, and item information 540.

The server program 501 is a program that causes the server processing section 200s to function as the user management section 211, the online shopping function section 213, the acquisition section 215, the purchase target user setting section 217, the estimation section 219, the recommendation display control section 221, and the remeasurement request display control section 223.

The user management data 510 is prepared for each registered user and stores various data for management purposes related to the provision of online shopping services in association with the registered user ID. Specifically, as illustrated in FIG. 19, a piece of user management data 510 includes a registered user ID 511, a registered user name 513, wearing user data 520, and purchase history data 531 of items such as shoes purchased by the registered user.

The wearing user data 520 is prepared for each wearing user associated with the registered user. A piece of wearing user data 520 is associated with a wearing user ID 521 and includes a wearing user name 522, attribute information 523, measurement information 525, measurement date and time (previous measurement timing) 527 related to the measurement information 525, and comfort level variation information 529 (see FIGS. 4 to 6) for each item (in the present embodiment, shoes).

The item information 540 is prepared for each item and stores various data related to the item. For example, the item information 540 includes various types of specification information and evaluation information used to generate the comfort level variation information 529 for the item, information to be displayed on the terminal apparatus 1500 as product information such as price, product images, and availability.

### 2. Terminal Apparatus

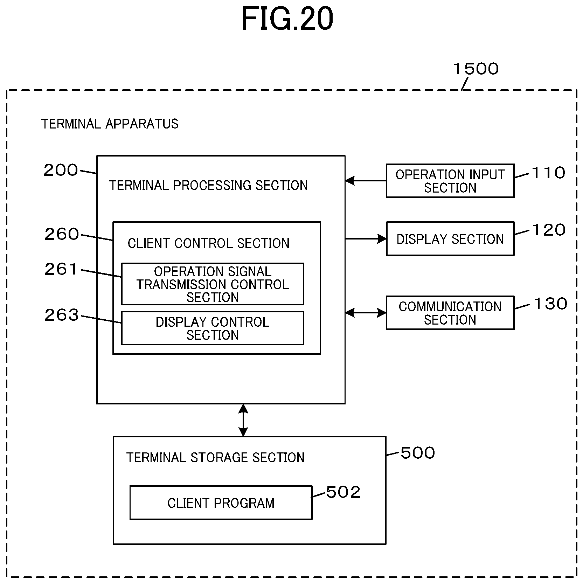

FIG. 20 is a block diagram illustrating a functional configuration example of the terminal apparatus 1500. As illustrated in FIG. 20, the terminal apparatus 1500 includes an operation input section 110, a display section 120, a communication section 130, a terminal processing section 200, and a terminal storage section 500.

The operation input section 110 outputs, to the terminal processing section 200, operation input signals corresponding to various operation inputs made by the user. For example, the operation input section 110 can be implemented by a keyboard, mouse, push switch, joystick, touchpad, trackball, acceleration sensor, gyro, or the like. Referring to FIG. 2, the directional input key 1502, the home key 1504, and the touch panel 1506 correspond to this.

The display section 120 is implemented by a display device such as a liquid crystal display (LCD) and a touch panel, for example, and provides various types of display in response to display signals from the terminal processing section 200. Referring to FIG. 2, the touch panel 1506 corresponds to this.

The communication section 130 is implemented by a wired or wireless communication device, and connects to the network 9 to communicate with an external device (for example, the server system 1100). The communication section 130 is implemented by a wireless communication device, a modem, a TA, a jack for a wired communication cable, a control circuit, and the like. Referring to FIG. 2, the wireless communication module 1553 corresponds to this.

The terminal processing section 200 can be implemented by a processor, which is an arithmetic circuit such as a CPU, GPU, ASIC, and FPGA, and electronic components such as IC memory, for example, and controls the input and output of data between each part of the device, including the operation input section 110 and the terminal storage section 500. The terminal processing section 200 then performs various calculation processes based on predetermined programs and data, operation input signals from the operation input section 110, data received from the server system 1100, and the like to comprehensively control the operations of the terminal apparatus 1500. Referring to FIG. 2, the control board 1550 and the CPU 1551 correspond to this.

The terminal processing section 200 also includes a client control section 260. The client control section 260 performs various controls for causing the terminal apparatus 1500 to function as a Man-Machine Interface (MMIF). The client control section 260 includes an operation signal transmission control section 261 and a display control section 263.

The operation signal transmission control section 261 performs processing for transmitting various data and request information to the server system 1100 in response to an operation input to the operation input section 110.

The display control section 263 performs control to display the recommendation display screen and remeasurement request display element described with reference to FIGS. 7 to 17 on the display section 120, based on the data received from the server system 1100.

The terminal storage section 500 stores programs for operating the terminal apparatus 1500 and implementing the functions of the terminal apparatus 1500, data used during execution of these programs, and the like. These are stored in advance or temporarily stored each time processing is performed. For example, the server storage section 500s can be implemented by IC memory such as RAM or ROM, magnetic disks such as hard disks, optical disks such as CD-ROMs or DVDs, or the like. In the example of FIG. 2, the IC memory 1552 mounted on the control board 1550 corresponds to this.

The terminal storage section 500 also stores a client program 502 (application program) for causing the terminal apparatus 1500 to function as the client control section 260.

### [Flow of Processing]

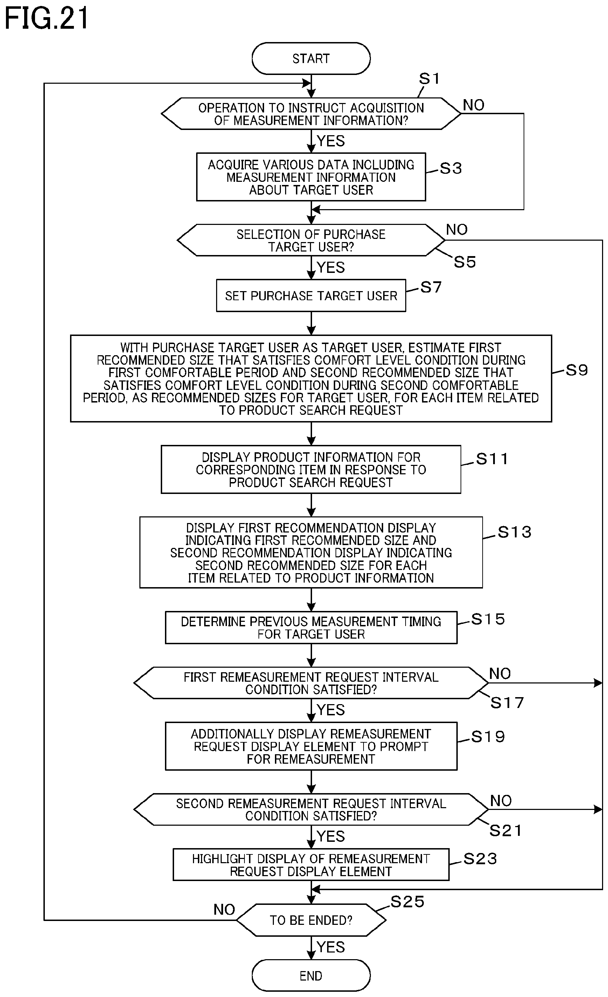

FIG. 21 is a flowchart illustrating a flow of processing in the server system 1100. The processing described here is implemented by the server processing section 200s reading and executing the server program 501.

In the present embodiment, the server processing section 200s accepts an operation of instructing acquisition of measurement information on the terminal apparatus 1500 of a logged-in registered user. At this time, the server processing section 200s also accepts an operation of specifying the wearing user as the target user. The operations accepted here include a selection operation of selecting the remeasurement button (execution instruction element) performed by the registered user on the remeasurement request display element described with reference to FIGS. 8 to 17. If the operation on the terminal apparatus 1500 is detected (step S1: YES), the acquisition section 215 executes a data acquisition process to acquire various data including measurement information about the target user (step S3). If the remeasurement button is selected, the measurement information is acquired again. Based on the acquired data, the acquisition section 215 sets and updates the attribute information 523, measurement information 525, and comfort level variation information 529 of the wearing user data 520 (see FIG. 19) related to the target user.

Furthermore, the purchase target user setting section 217 executes a purchase target user setting process, and accepts a selection operation of selecting a purchase target user on the terminal apparatus 1500 of the logged-in registered user. Then, if detecting the selection operation on the terminal apparatus 1500 (step S5: YES), the purchase target user setting section 217 sets the purchase target user (step S7). After that, if the registered user requests a product search, the estimation section 219 performs an estimation process, taking the corresponding item as the estimation target item. That is, for each estimation target item, the estimation section 219 estimates the recommended size for the target user when wearing the estimation target item, based on the comfort level variation information 529 for the estimation target item related to the target user (step S9). In the present embodiment, the estimation section 219 estimates the first recommended size that satisfies a predetermined comfort level condition during the first comfortable period, and the second recommended size that satisfies the comfort level condition during the second comfortable period whose start time is later than the start time of the first comfortable period, in the manner described with reference to FIGS. 4 to 6.

Then, in response to the product search request, the online shopping function section 213 displays product information of the corresponding item on the terminal apparatus 1500 (step S11). At that time, the recommendation display control section 221 sets the purchase target user as the target user, and performs recommendation display control to display, for each item related to the product information, the first recommendation display indicating the first recommended size for the target user estimated in step S5, and the second recommendation display indicating the second recommended size for the target user, on the terminal apparatus 1500 (step S13).

Next, the remeasurement request display control section 223 determines the previous measurement timing for the target user of the recommendation display control in step S13 (step S15). Then, if the number of days elapsed since the previous measurement timing determined in step S15 satisfies the first remeasurement request interval condition (step S17: YES), the remeasurement request display control section 223 performs control to additionally display a remeasurement request display element prompting for remeasurement on the terminal apparatus 1500 in which the recommendation display control is performed (step S19). In addition, if the number of days elapsed since the previous measurement timing determined in step S15 satisfies the second remeasurement request interval condition that has a longer interval than the first remeasurement request interval condition (step S21: YES), the remeasurement request display control section 223 performs highlight display control to highlight the remeasurement request display element (step S23).

Then, in step S25, it is determined whether to end the process, and until it is determined that the process is to be ended (step S25: NO), the process returns to step S1 and the above-described steps are repeated.

As described above, according to the present embodiment, it is possible to estimate the first recommended size that satisfies the comfort level condition when the target user wears the item during the first comfortable period, and the second recommended size that satisfies the comfort level condition when the target user wears the item during the second comfortable period that comes after the first comfortable period. It is also possible to perform recommendation display control by displaying the first recommendation display indicating the first recommended size on the terminal apparatus 1500, and displaying the second recommendation display indicating the second recommended size on the terminal apparatus 1500 together with the first recommendation display. In this case, the first comfortable period display indicating the first comfortable period can be displayed in association with the first recommendation display indicating the first recommended size, and the second comfortable period display indicating the second comfortable period can be displayed in association with the second recommendation display indicating the second recommended size. This makes it possible to present information indicating the size at which the target user who wears an item can comfortably wear the item.

Furthermore, according to the present embodiment, if the number of days related to the first remeasurement request interval condition has elapsed since the last measurement information was obtained for the target user, a remeasurement request display element prompting a remeasurement can be additionally displayed when the recommendation display control for the target user is performed. Then, if the number of days related to the second remeasurement request interval condition has elapsed since the previous measurement information on the target user was acquired, the remeasurement request display element can be highlighted. This makes it possible to prompt the target user to reacquire measurement information (making a measurement related to the measurement information) at any time, and to appropriately present recommended sizes (first recommended size, second recommended size, and the like) and comfortable periods (first comfortable period, second comfortable period, and the like) that suit the target user.

Note that the modes to which the present invention is applicable are not limited to the foregoing embodiments, and the components can be added, omitted, or changed as appropriate.

### [Modification Example 1]

For example, in the above embodiment, the first comfortable period is basically estimated using the target user's current wearing size (the size at which the item can be worn comfortably at the current time point) as the first recommended size. Therefore, at the timing when the recommendation display control is performed, the target user may soon increase in size, and there may be a situation where there is little time left in the first comfortable period. Therefore, when the estimated first comfortable period remaining is short, the user may be notified that the purchase of the second recommended size is recommended rather than the first recommended size. This is because the item of the first recommended size quickly becomes too small to wear, while the item of the second recommended size can be worn for a longer period of time. It is possible to determine whether the length of the period from the timing for performing the recommendation display control to the end of the first comfortable period is short based on whether a predetermined short-term condition is satisfied. The specific threshold for the length of the short-term condition is not particularly limited, and may be shorter, equal to, or longer than one month, for example.

In addition, if a separate service is provided to buy back items at a predetermined trade-in price at the time of purchase, the trade-in price may be displayed near the display of the first recommended size or the like when there is little time left in the first comfortable period. The trade-in price at a time point when the first comfortable period has elapsed since the purchase of the item can be predicted and displayed. Even though the comfortable period for the first recommended size is short, the trade-in price in the case of purchasing the item can be offered, thereby encouraging purchase. Alternatively, if it is determined that the first comfortable period remaining is short, the first comfortable period may be estimated by setting the first recommended size to one size larger, and the second comfortable period may be estimated by setting the second recommended size to one size larger than the first recommended size after the increase.

### [Modification Example 2]

The present invention is not limited to the configuration in which both (1) a display related to the first recommended size (display of the first recommended size and the first comfortable period) and (2) a display related to the second recommended size (display of the second recommended size and the second comfortable period) are displayed. Either (1) or (2) may be displayed. For example, one of (1) and (2) may be selected based on the category of the item to be displayed, the duration of the first comfortable period, purchase history data 531 of the registered user (see FIG. 19), and the like.

As a specific process, for example, it is first determined whether the remaining duration of the period from the timing for performing the recommendation display control to the end of the first comfortable period satisfies a predetermined long-term condition, and if the duration is determined as long, (1) is displayed. The threshold for the length as the long-term condition may be set as appropriate, and may be six months, for example. On the other hand, if it is determined that the remaining duration of the first comfortable period does not satisfy the long-term condition, (1) or (2) is displayed depending on the category of the item. That is, for example, if the category of the item is "sports shoes" such as sneakers, it is expected that the item will be worn frequently and have a relatively short lifespan, so there is a sufficient possibility that the item of the first recommended size will be purchased even within the first comfortable period that is determined to have a short remaining duration. On the other hand, in the case of a category such as "fashion shoes" which is expected to be used less frequently than "sports shoes", for example, it is considered that the item of the first recommended size will often be passed over for purchase. Therefore, it may be determined that if the former applies, (1) is to be displayed, and if the latter applies, (2) is to be displayed.

Furthermore, based on the purchase history data 531 of the registered user (see FIG. 19), if a plurality of items of the first recommended size in the same category have already been purchased, or if only one item has been purchased but it has been purchased recently (for example, within a specified period, such as within one month), (2) may be displayed.

### [Modification Example 3]

In the above embodiment, an example of a recommendation display screen is taken in which the terminal apparatus 1500 displays the first recommended size and the second recommended size estimated for each item (see FIG. 7). On the other hand, if there are other wearing users associated with the registered user in addition to the wearing user designated as the purchase target user (that is, if a plurality of wearing users are associated with the registered user), first recommended sizes and second recommended sizes may also be estimated for the other wearing users and displayed together on a recommendation display screen.

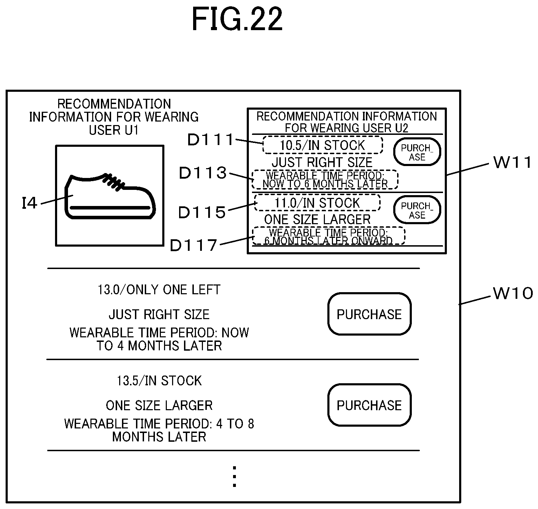

FIG. 22 is a diagram illustrating an example of a recommendation display screen in the present modification example. FIG. 22 illustrates an example in which two wearing users are associated with a registered user (for example, a wearing user U1 selected as the purchase target user is the eldest son, and a wearing user U2 who is the second son is also associated). As illustrated in FIG. 22, a recommendation display screen W10 of the present modification example is an example in which a display area W11 for the wearing user U2 is added to the recommendation display screen W4 for the wearing user U1 in FIG. 7. In the display area W11, a first recommended size D111 and a second recommended size D115 of an item I4 estimated for the wearing user U2 are displayed. Furthermore, a first comfortable period D113 is displayed in association with the first recommended size D111, and a second comfortable period D117 is displayed in association with the second recommended size D115.

The display position of the display area W11 illustrated in FIG. 22 is an example and is not particularly limited. For example, a display related to the wearing user U1 (display of the first recommended size and first comfortable period, and the second recommended size and second comfortable period for the wearing user U1) and a display related to the wearing user U2 (display of the first recommended size and first comfortable period, and the second recommended size and second comfortable period for the wearing user U2) may be displayed vertically.

In Modification Example 3, an example is taken in which both the first recommended size and the second recommended size are displayed for the wearing user U2 in the display area W11. However, the display related to the second recommended size (display of the second recommended size and the second comfortable period) may not be displayed, and only the display related to the first recommended size (display of the first recommended size and the first comfortable period) may be displayed. Alternatively, the display related to the first recommended size (display of first recommended size and first comfortable period) may not be displayed, and only the display related to the second recommended size (display of second recommended size and second comfortable period) may be displayed. Alternatively, only the recommended sizes (first recommended size, second recommended size, and the like) may be displayed, and the comfortable periods (first comfortable period, second comfortable period, and the like) may not be displayed. Alternatively, the display related to the first recommended size (first recommended size and first comfortable period) and the second recommended size may be displayed, and the second comfortable period may not be displayed.

Furthermore, based on the purchase history data 531 of the registered user (see FIG. 19), it may be determined whether the display for the wearing user U2 who is the second son in the display area W11 (see FIG. 22) is to be (1) a display related to the first recommended size (display of the first recommended size and the first comfortable period), (2) a display related to the second recommended size (display of the second recommended size and the second comfortable period), or (3) a display related to both the first recommended size and the second recommended size. For example, if an item (shoes) of the first recommended size has already been purchased for the wearing user U2, it can be estimated that the possibility of purchasing an item of the first recommended size again is low. In such a case, it is determined that (2) is to be displayed.

Furthermore, in the same manner as in Modification Example 2, it may be determined which of the above (1) to (3) is to be displayed in further consideration of the category of the item. For example, even if an item of the first recommended size has already been purchased for the wearing user U2, the possibility of purchasing an item of the same first recommended size again may be determined differently depending on the category of the purchased item. Specifically, if the purchased item is "sports shoes", there may be a case where an item of the first recommended size is purchased again for the wearing user U2 because the purchased item has worn out. On the other hand, in the case of a category in which items are expected to be used relatively less frequently, such as "fashion shoes", for example, an item in the same first recommended size as the purchased item is unlikely to be purchased again. Therefore, it may be determined that if the former applies, (1) or (3) is to be displayed, and if the latter applies, (2) is to be displayed.

### [Modification Example 4]

If a plurality of wearing users (for example, wearing users U1 and U2) are associated with a registered user, instead of displaying the display area W11 as in Modification Example 3, the display targets on the recommendation display screen may be displayed in a switchable manner. Specifically, for example, a switching button is arranged on a recommendation display screen W4 for a wearing user U1 in FIG. 7 to accept a display switching operation by the user. Then, in response to a selection operation of the switching button on a terminal apparatus 1500, the display of the recommendation display screen W4 is changed to the display of the first recommended size and first comfortable period or the second recommended size and second comfortable period of an item I4 estimated for the wearing user U2. If the switching button is selected again, the display on the recommendation display screen W4 is changed to the display of the first recommended size and first comfortable period or the second recommended size and second comfortable period of the item I4 estimated for the wearing user U1. Since it is possible to switch between displays related to a plurality of wearing users on the same page, it is easier to lead a registered user to the purchasing behavior if the registered user wishes to purchase the same items for the plurality of wearing users as matching items, for example.

### [Modification Example 5]

In the above embodiment, the first remeasurement request interval condition is "three months or more", for example, and the second remeasurement request interval condition is "six months or more", for example. Alternatively, a first remeasurement request interval condition and a second remeasurement request interval condition may be set according to the age (age in months) of the target user. For example, this can be achieved by setting a first remeasurement request interval condition and a second remeasurement request interval condition to be applied for each age in months in advance, and then using the settings of the first remeasurement request interval condition and the second remeasurement request interval condition that match the age in months of the target user.

### [Modification Example 6]

If the target user is an adult whose growth has already stopped, or a child at an age where his/her feet will no longer grow, there is no second recommended size, and there is no end date for the first comfortable period. In such a case, a first comfortable period may be displayed with the end date that is the timing to replace the item (shoes). This is because shoes are wear-and-tear items and will eventually need to be replaced. The second recommended size and the second comfortable period are not displayed.

Specifically, for example, the date and time when the item was replaced is obtained from purchase history data 531 (see FIG. 19), and the end of the first comfortable period is set to be after a predetermined predicted wear-and-tear period from the date and time. The duration of the predicted wear-and-tear period may be set as appropriate, and may be set based on the average lifespan of shoes, for example. The duration of the predicted wear-and-tear period may be set according to the category of the purchased item. For example, for a category (such as "sports shoes") in which items are expected to be worn frequently (easily worn out and have relatively short lifespan), a first predicted wear-and-tear period that is a shorter predicted wear-and-tear period is used, and for a category (such as "fashion shoes") in which items are expected to be worn less frequently than "sports shoes", a second predicted wear-and-tear period that is longer than the first predicted wear-and-tear period is used.

Furthermore, if the second recommended size and second comfortable period are not displayed as in the present modification example, the current comfort level may be displayed for the first recommended size of the item.

### [Others]

The above describes the embodiments and modification examples of the present application, but these are merely examples. The present invention can be implemented in the aspects described in the section of the disclosure of the invention, and also in various other modes that include various modifications and improvements based on the knowledge of those skilled in the art.

### [Recapitulation]

The contents disclosed herein can be recapitulated as follows.

A 1st embodiment is a computer system that performs control for presenting recommendation information about an item to a user, the computer system comprising:
an estimation section that estimates a recommended size of a target item that satisfies a predetermined comfort condition for a predetermined comfortable period consisting of a plurality of days, based on size information on a size of the target item, body size information on a body size of a target user at a body part where the target item is worn, and growth change information on a growth change of the body part; and
a control section that performs control for presenting the recommended size estimated by the estimation section as the recommendation information.

A 2nd embodiment is the computer system according to the 1st embodiment, wherein the predetermined comfortable period is a second comfortable period whose start time is later than a start time of a first comfortable period.

A 3rd embodiment is the computer system according to the 2nd embodiment, wherein the control section performs control for presenting the predetermined comfortable period as the recommendation information.

A 4th embodiment is the computer system according to any one of the 1st to 3rd embodiments, wherein the control section performs control for presenting request information that prompts the user to acquire the body size information, instead of control for presenting the recommendation information, based on a predetermined number of days having elapsed since the body size information was last acquired.

A 5th embodiment is the computer system according to the fourth embodiment, wherein the control section performs control for including an execution instruction element for executing information processing related to the acquisition of the body size information in the request information and presenting the execution instruction element.

A 6th embodiment is the computer system according to any one of the 1st to 5th embodiments, wherein the estimation section estimates the recommended size for each of a plurality of users as the target users.

A 7th embodiment is the computer system according to any one of the 1st to 6th embodiments, wherein the estimation section estimates the recommended size for each of a plurality of users associated with a registered user in online shopping as the target users.

An 8th embodiment is the computer system according to any one of the 1st to 7th embodiments, wherein the estimation section estimates the recommended size for a user selected by the registered user from among the plurality of users associated with the registered user in the online shopping as the target user.

A 9th embodiment is an online shopping system that includes a server and a terminal and performs control for presenting recommendation information about an item to a user, the online shopping system comprising:
a functional section that executes information processing related to provision of an online shopping service;
an estimation section that estimates a recommended size of a target item that satisfies a predetermined comfort condition for a predetermined comfortable period consisting of a plurality of days, based on size information on a size of the target item, body size information on a body size of a target user at a body part where the target item is worn, and growth change information on a growth change of the body part; and
a control section that performs control for presenting the recommended size estimated by the estimation section as the recommendation information.

The contents disclosed herein can also be recapitulated as follows.

A 11th embodiment is the computer system that performs control to display recommendation information on an item that is capable of being worn by a user on a terminal apparatus, and includes: an acquisition section that acquires measurement information of a target user related to a body part where the item is worn; an estimation section that estimates, based on the measurement information, a first recommended size to satisfy a predetermined comfort level condition during a first comfortable period when the item is worn by the target user; and a recommendation display control section that performs recommendation display control to display a first recommendation display indicating the first recommended size on the terminal apparatus.

According to the present embodiment, the first recommended size that satisfies the comfort level condition when the target user wears the item during the first comfortable period can be estimated, and recommendation display control can be performed to display the first recommendation display indicating the first recommended size on the terminal apparatus. This makes it possible to present information indicating the size at which the target user who wears an item can comfortably wear the item.

A 12th embodiment is the computer system according to the 11th embodiment, wherein
the estimation section estimates, based on the measurement information, a second recommended size that satisfies the comfort level condition during a second comfortable period whose start time is later than a start time of the first comfortable period, and
the recommendation display control section performs the recommendation display control by displaying, together with the first recommendation display, a second recommendation display indicating the second recommended size on the terminal apparatus.

According to this embodiment, it is possible to perform the recommendation display control by estimating the second recommended size that satisfies the comfort level condition when the target user wears the item during the second comfortable period whose start time comes after the start time of the first comfortable period, and displaying the second recommendation display indicating the second recommended size on the terminal apparatus together with the first recommendation display.

A 13th embodiment is the computer system according to the 12th embodiment, wherein
the recommendation display control section performs the recommendation display control by performing control to display a first comfortable period display indicating the first comfortable period in association with the first recommendation display, and performing control to display a second comfortable period display indicating the second comfortable period in association with the second recommendation display.

According to this embodiment, it is possible to perform the recommendation display control by displaying the first recommendation display indicating the first recommended size in association with the first comfortable period display indicating the first comfortable period, and displaying the second recommendation display indicating the second recommended size in association with the second comfortable period display indicating the second comfortable period.

A 14th embodiment is the computer system according to any one of the 11th to 13th embodiments, further including:
a remeasurement request display control section that performs control to, if the number of days elapsed since a measurement timing related to the measurement information satisfies a first remeasurement request interval condition, additionally display a remeasurement request display element prompting for remeasurement on the terminal apparatus in which the recommendation display control is performed.

According to this embodiment, it is possible that if the number of days related to the first remeasurement request interval condition has elapsed since the last measurement information on the target user was acquired, the remeasurement request display element prompting for remeasurement is additionally displayed when the recommendation display control for the target user is performed.

A 15th embodiment is the computer system according to the 14th embodiment, wherein
the remeasurement request display control section performs highlight display control to highlight the remeasurement request display element if the number of elapsed days satisfies a second remeasurement request interval condition that has a longer interval than the first remeasurement request interval condition.

According to this embodiment, it is possible that if the number of days related to the second remeasurement request interval condition has elapsed since the last measurement information on the target user was acquired, the remeasurement request display element is highlighted when the recommendation display control for the target user is performed.

A 16th embodiment is the computer system according to the 15th embodiment, wherein
the highlight display control includes display control for increasing a display size of the remeasurement request display element.

According to this embodiment, it is possible to perform the highlight display control of the remeasurement request display element by increasing the display size of the remeasurement request display element.

A 17th embodiment is the computer system according to the 15th or 16th embodiment, wherein
the highlight display control includes control of superimposing the remeasurement request display element on the front side.

According to this embodiment, it is possible to perform the highlight display control of the remeasurement request display element by superimposing the remeasurement request display element on the front side.

An 18th embodiment is the computer system according to the 17th embodiment, wherein
the highlight display control includes control of hiding a display content behind the remeasurement request display element or of making it difficult to see.

According to this embodiment, it is possible to perform the highlight display control of the remeasurement request display element by hiding the display content behind the remeasurement request display element or making it difficult to see.

A 19th embodiment is the computer system according to the 17th or 18th embodiment, wherein
the highlight display control includes control of displaying the remeasurement request display element at a fixed position so as to hide the first recommendation display.

According to this embodiment, it is possible to perform the highlight display control of the remeasurement request display element by displaying the remeasurement request display element at a fixed position so as to hide the first recommendation display.

A 20th embodiment is the computer system according to any one of the 14th to 19th embodiments, wherein
the remeasurement request display element includes an execution instruction element for reacquiring the measurement information,
the remeasurement request display control section performs
control to display the remeasurement request display element together with a display cancel instruction element if the first remeasurement request interval condition is satisfied, and
control to display the remeasurement request display element without displaying the display cancel instruction element if the number of elapsed days satisfies the second remeasurement request interval condition that has a longer interval than the first remeasurement request interval condition.

According to this embodiment, it is possible to display the remeasurement request display element including the execution instruction element for reacquiring measurement information if the number of days related to the first remeasurement request interval condition has elapsed since the last measurement information on the target user was acquired, or if the number of days related to the second remeasurement request interval condition has elapsed since the last measurement information on the target user was acquired. Then, it is possible to display the remeasurement request display element together with the display cancel instruction element if the number of days related to the first remeasurement request interval condition has elapsed. Accordingly, the remeasurement request display element in this case can be configured such that the display can be canceled. On the other hand, it is possible to display the remeasurement request display element without displaying the display cancel instruction element if the number of days related to the second remeasurement request interval condition has elapsed. Accordingly, the remeasurement request display element in this case can be configured such that the display cannot be canceled.

A 21st embodiment is the computer system according to any one of the 14th to 20th embodiments, wherein
the remeasurement request display element includes an execution instruction element for reacquiring the measurement information,
the remeasurement request display control section performs
control to display the remeasurement request display element together with a display cancel instruction element if the first remeasurement request interval condition is satisfied, and
control to display the remeasurement request display element with the display cancel instruction element disabled if the number of elapsed days satisfies the second remeasurement request interval condition that has a longer interval than the first remeasurement request interval condition.

According to this embodiment, it is possible that, if the number of days related to the second remeasurement request interval condition has elapsed, the remeasurement request display element is displayed with the display cancel instruction element disabled, and in this case, the remeasurement request display element can be configured such that the display cannot be canceled.

A 22nd embodiment is the computer system according to any one of the 14th to 21st embodiments, further including:
an age acquisition section that acquires the age of the target user; and
an interval condition control section that variably controls the first remeasurement request interval condition based on the age acquired by the age acquisition section.

According to this embodiment, the number of elapsed days related to the first remeasurement request interval condition can be set to the number of days according to the age of the target user.

A 23rd embodiment is the computer system according to any one of the 11th to 22nd embodiments, wherein
the target users include a plurality of users,
the estimation section estimates the first recommended size for each user included in the target users, and
the recommendation display control section performs the recommendation display control for each user included in the target users.

According to this embodiment, it is possible that, if the target users include a plurality of users, the first recommended size for each of the plurality of users is estimated, and the recommendation display control is performed to display the first recommendation display indicating the first recommended size for each of the plurality of users on the terminal apparatus.

A 24th embodiment is the computer system according to the 12th or 13th embodiment, wherein
the target users include a plurality of users,
the estimation section estimates the first recommended size and the second recommended size for each user included in the target users, and
the recommendation display control section performs the recommendation display control for each user included in the target users.

According to this embodiment, it is possible that, if the target users include a plurality of users, the first recommended size and the second recommended size for each of the plurality of users are estimated, and the recommendation display control is performed to display, for each of the plurality of users, the second recommendation display indicating the second recommended size together with the first recommendation display on the terminal apparatus.

A 25th embodiment is the computer system according to any one of the 11th to 24th embodiments, further comprising:
an online shopping function section for selling the item through online shopping using the terminal apparatus as a man-machine interface;
a user data management section that manages data of a registered user in the online shopping and data of the target user associated with the registered user; and
a purchase target user setting section that sets a purchase target user in the online shopping based on an operation input on the terminal apparatus,
wherein
the recommendation display control section performs the recommendation display control if the target user is set as the purchase target user by the purchase target user setting section.

According to this embodiment, it is possible to perform the recommendation display control for the purchase target user as the target user in the online shopping.

A 26th embodiment is the computer system according to the 25th embodiment, wherein
the target user is a child user.

According to this embodiment, it is possible to perform the recommendation display control for a child user as the target user.

A 27th embodiment is an online shopping system comprising:
a server system that is a computer system according to the 25th embodiment; and
the terminal apparatus.

According to this embodiment, it is possible to realize an online shopping system that provides the same advantageous effects as those of the above-described embodiments.

A 28th embodiment is
a recommendation information provision control method for a computer system to execute control for displaying recommendation information about an item that is capable of being worn by a user on a terminal apparatus, the method comprising:
acquiring measurement information of a target user related to a body part where the item is worn;
estimating a first recommended size that satisfies a predetermined comfort level condition during a first comfortable period when the target user wears the item, based on the measurement information; and
performing recommendation display control to display a first recommendation display indicating the first recommended size on the terminal apparatus.

According to this embodiment, it is possible to realize a recommendation information provision control method that provides the same advantageous effects as those of the first embodiment.

A 29th embodiment is
a program for causing a terminal apparatus to execute control for displaying recommendation information about an item that is capable of being worn by a user, the program causing the terminal apparatus to:
communicate with a server system that estimates a first recommended size that satisfies a predetermined comfort level condition during a first comfortable period when a target user wears the item, based on given measurement information of the target user related to a body part where the item is worn;
transmit the measurement information of the target user to the server system; and
perform recommendation display control to display a first recommendation display indicating the first recommended size.

According to this embodiment, it is possible to realize a program that provides the same advantageous effects as those of the 11th embodiment.

### [REFERENCE SIGNS LIST]

- 1000: Online shopping system
- 1100: Server system
- 110s: Operation input section
- 120: Display section
- 130s: Communication section
- 200s: Server processing section
- 211: User management section
- 213: Online shopping function section
- 215: Acquisition section
- 217: Purchase target user setting section
- 219: Estimation section
- 221: Recommendation display control section
- 223: Remeasurement request display control section
- 500s: Server storage section
- 501: Server program
- 510: User management data
- 511: Registered user ID
- 520: Wearing user data
- 521: Wearing user ID
- 523: Attribute information
- 525: Measurement information
- 527: Measurement date and time
- 529: Comfort level variation information
- 531: Purchase history data
- 540: Item information
- 1500: User terminal
- 110: Operation input section
- 120: Display section
- 130: Communication section
- 200: Terminal processing section
- 260: Client control section
- 261: Operation signal transmission control section
- 263: Display control section
- 500: Terminal storage section
- 502: Client program
- 9: Network

## Claims

1. A computer system that performs control for presenting recommendation information about an item to a user, the computer system comprising:
an estimation section that estimates a recommended size of a target item that satisfies a predetermined comfort condition for a predetermined comfortable period consisting of a plurality of days, based on size information on a size of the target item, body size information on a body size of a target user at a body part where the target item is worn, and growth change information on a growth change of the body part; and
a control section that performs control for presenting the recommended size estimated by the estimation section as the recommendation information.

2. The computer system according to claim 1, wherein the predetermined comfortable period is a second comfortable period whose start time is later than a start time of a first comfortable period.

3. The computer system according to claim 2, wherein the control section performs control for presenting the predetermined comfortable period as the recommendation information.

4. The computer system according to any one of claims 1 to 3, wherein the control section performs control for presenting request information that prompts the user to acquire the body size information, instead of control for presenting the recommendation information, based on a predetermined number of days having elapsed since the body size information was last acquired.

5. The computer system according to claim 4, wherein the control section performs control for including an execution instruction element for executing information processing related to the acquisition of the body size information in the request information and presenting the execution instruction element.

6. The computer system according to any one of claims 1 to 5, wherein the estimation section estimates the recommended size for each of a plurality of users as the target users.

7. The computer system according to any one of claims 1 to 6, wherein the estimation section estimates the recommended size for each of a plurality of users associated with a registered user in online shopping as the target users.

8. The computer system according to any one of claims 1 to 7, wherein the estimation section estimates the recommended size for a user selected by the registered user from among the plurality of users associated with the registered user in the online shopping as the target user.

9. An online shopping system that includes a server and a terminal and performs control for presenting recommendation information about an item to a user, the online shopping system comprising:
a functional section that executes information processing related to provision of an online shopping service;
an estimation section that estimates a recommended size of a target item that satisfies a predetermined comfort condition for a predetermined comfortable period consisting of a plurality of days, based on size information on a size of the target item, body size information on a body size of a target user at a body part where the target item is worn, and growth change information on a growth change of the body part; and
a control section that performs control for presenting the recommended size estimated by the estimation section as the recommendation information.
